(19) Europäisches Patentamt
European Patent Office
Office européen des brevets

(11) **EP 4 678 432 A1**

(12) **EUROPEAN PATENT APPLICATION**
published in accordance with Art. 153(4) EPC

(43) Date of publication:
**14.01.2026  Bulletin 2026/03**

(21) Application number: **24766909.6**

(22) Date of filing: **22.02.2024**

(51) International Patent Classification (IPC):
***B60H 1/22*** (2006.01)          ***B60L 3/00*** (2019.01)
***F25B 1/00*** (2006.01)          ***B60K 11/04*** (2006.01)

(52) Cooperative Patent Classification (CPC):
**B60H 1/22; B60L 3/00; F25B 1/00;** B60K 11/04

(86) International application number:
**PCT/JP2024/006571**

(87) International publication number:
**WO 2024/185538 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.03.2023  JP 2023032910**

(71) Applicant: **DENSO CORPORATION
Kariya-city, Aichi 448-8661 (JP)**

(72) Inventors:
• **YAMAMOTO, Hiroyoshi
Kariya-city, Aichi 448-8661 (JP)**
• **NUMATA, Masanari
Kariya-city, Aichi 448-8661 (JP)**
• **YOKOYAMA, Naoki
Kariya-city, Aichi 448-8661 (JP)**

(74) Representative: **TBK
Bavariaring 4-6
80336 München (DE)**

(54) **REFRIGERATION CYCLE DEVICE**

(57)    A refrigeration cycle apparatus includes: a heat transfer medium circulation path (30) through which a heat transfer medium circulates, a power train equipment (35, 36) that is an electrical device for generating driving force for a vehicle, and cooled by the heat transfer medium, a cooling target object (33) having a greater thermal time constant than the power train equipment and being cooled by the heat transfer medium, a radiator (32) for heat exchange between the heat transfer medium and the outside air, a chiller (17) for heat exchange between a refrigerant of a refrigeration cycle and the heat transfer medium, a supply ratio adjustment unit (37, 38, 46) that adjusts the supply ratio of the heat transfer medium to the power train equipment and the cooling target object respectively, and a supply ratio determination unit (60) that determines the supply ratio, the supply ratio determination unit determining the supply ratio such that, when both the power train equipment and the cooling target object need to be cooled, the supply of the heat transfer medium to the power train equipment is prioritized and the temperature rise of the cooling target object is suppressed by utilizing the thermal time constant of the cooling target object.

FIG.9

EP 4 678 432 A1

**Description**

[CROSS-REFERENCE TO RELATED APPLICATIONS]

This application is based on Japanese Patent Application No. 2023-32910 filed on March 3, 2023, and the contents thereof are hereby incorporated by reference.

[TECHNICAL FIELD]

The present disclosure relates to a refrigeration cycle apparatus for cooling power train equipment.

[BACKGROUND ART]

Patent Document 1 discloses a vehicle-mounted refrigeration cycle apparatus that recovers heat emitted from power train equipment, such as inverters and motor-generators, and utilizes it for heating the vehicle interior. The power train equipment is electrical equipment that generates driving force for the vehicle and generates heat during operation.
In this conventional technology, a coolant liquid evaporator, a low-temperature radiator, and the power train equipment are arranged in parallel with each other in a low-temperature coolant liquid circulation route through which low-temperature coolant liquid circulates. The coolant liquid evaporator exchanges heat between the low-pressure refrigerant of the refrigeration cycle and the low-temperature coolant liquid in the low-temperature coolant liquid circulation route, causing the low-pressure refrigerant to absorb heat from the low-temperature coolant liquid. The low-temperature radiator releases heat from the low-temperature coolant liquid to the outside air.
In this conventional technology, it is possible to switch between a state where the low-temperature coolant liquid circulates between the power train equipment and the coolant liquid cooling evaporator and a state where the low-temperature coolant liquid circulates between the power train equipment and the low-temperature radiator using a three-way valve.
In the state where the low-temperature coolant liquid circulates between the power train equipment and the coolant liquid cooling evaporator, the heat emitted from the power train equipment is utilized for heating the vehicle interior. In the state where the low-temperature coolant liquid circulates between the power train equipment and the low-temperature radiator, the heat emitted from the power train equipment is released to the outside air.

[PRIOR ART REFERENCES]

[PATENT DOCUMENT]

[Patent Document 1] JP6791052B2

[SUMMARY OF INVENTION]

In the above conventional technology, efficient cooling of the power train equipment has not been considered, resulting in limitations when attempting to achieve miniaturization or improved running performance of the power train equipment.
This disclosure aims to efficiently cool a power train equipment in light of the above problems.
The refrigeration cycle apparatus according to one embodiment of the present disclosure includes a heat transfer medium circulation path, power train equipment, a cooling target object, a radiator, a chiller, a supply ratio adjustment, and a supply ratio determination unit.
Through the heat transfer medium circulation path, a heat transfer medium circulates. The power train equipment is an electrical device for generating driving force for a vehicle and cooled by the heat transfer medium. The cooling target object has a greater thermal time constant than the power train equipment and is cooled by the heat transfer medium. The radiator performs heat exchange between the heat transfer medium and the outside air. The chiller performs heat exchange between a refrigerant of a refrigeration cycle and the heat transfer medium.
The supply ratio adjustment unit adjusts the supply ratio of the heat transfer medium to the power train equipment and the cooling target object respectively. The supply ratio determination unit that determines the supply ratio, the supply ratio determination unit determining the supply ratio such that, when both the power train equipment and the cooling target object need to be cooled, the supply of the heat transfer medium to the power train equipment is prioritized and the temperature rise of the cooling target object is suppressed by utilizing the thermal time constant of the cooling target object.
According to this, when distributing cooling capacity to the power train equipment and the cooling target object, it is possible to cool the power train equipment efficiently using the thermal time constant of cooling target object.

[BRIEF DESCRIPTION OF DRAWINGS]

The above objectives and other objectives, features, and advantages of the present disclosure will become clearer with reference to the accompanying drawings and the detailed description below.

Fig. 1 is a general configuration diagram according to a first embodiment of a refrigeration cycle apparatus.

Fig. 2 is a block diagram showing the electrical control unit of the refrigeration cycle apparatus according to the first embodiment.

Fig. 3 is a configuration diagram showing a low-temperature coolant liquid circulation route in a radiator heat dissipation mode of the refrigeration cycle apparatus according to the first embodiment.

Fig. 4 is a configuration diagram showing the low-temperature coolant liquid circulation route in a radiator heat dissipation battery cooling mode of the refrigeration cycle apparatus according to the first embodiment.

Fig. 5 is a configuration diagram showing the low-temperature coolant liquid circulation route in a chiller cooling mode of the refrigeration cycle apparatus according to the first embodiment.

Fig. 6 is a configuration diagram showing the low-temperature coolant liquid circulation route in a coordinated cooling mode of refrigeration cycle apparatus in the first embodiment.

Fig. 7 is a flowchart showing a part of a control process performed by the control device of the refrigeration cycle apparatus according to the first embodiment.

Fig. 8 is a flowchart showing the other part of the control process performed by the control device of the refrigeration cycle apparatus according to the first embodiment.

Fig. 9 is a time chart showing an example of control of the refrigeration cycle apparatus according to the first embodiment.

Fig. 10 is a flowchart showing a part of the control process performed by the control device of refrigeration cycle apparatus according to a second embodiment.

Fig. 11 is a time chart showing an example of control of the refrigeration cycle apparatus according to the second embodiment.

Fig. 12 is a block diagram showing the overall configuration of the refrigeration cycle apparatus according to the second embodiment.

Fig. 13 is a configuration diagram showing a low-temperature coolant liquid circulation route in a radiator heat dissipation mode of the refrigeration cycle apparatus according to a third embodiment.

Fig. 14 is a configuration diagram showing the low-temperature coolant liquid circulation route in a radiator heat dissipation cooling mode of the refrigeration cycle apparatus according to the third embodiment.

Fig. 15 is a configuration diagram showing the low-temperature coolant liquid circulation route in a chiller cooling mode of the refrigeration cycle apparatus according to the third embodiment.

Fig. 16 is a configuration diagram showing the low-temperature coolant liquid circulation route in the coordinated cooling mode of the refrigeration cycle apparatus according to the third embodiment.

Fig. 17 is a flowchart showing a part of the control process performed by the control device of the refrigeration cycle apparatus according to the third embodiment.

Fig. 18 is a flowchart showing the other part of the control process performed by the control device of the refrigeration cycle apparatus according to the third embodiment.

[DESCEIPTION OF EMBODIMENTS]

The following describes multiple embodiments for implementing the present disclosure with reference to the drawings. In each embodiment, descriptions of parts corresponding to matters described in the preceding embodiment may be omitted by using the same reference symbol. In each embodiment, when only a part of the configuration is described, the other parts of the configuration may be applied by referring to the preceding embodiment. Not only the combinations explicitly indicated as specifically combinable in each embodiment, but also combinations of embodiments that are not explicitly indicated may be partially combined with each other, provided that no combination issues arise.

(First Embodiment)

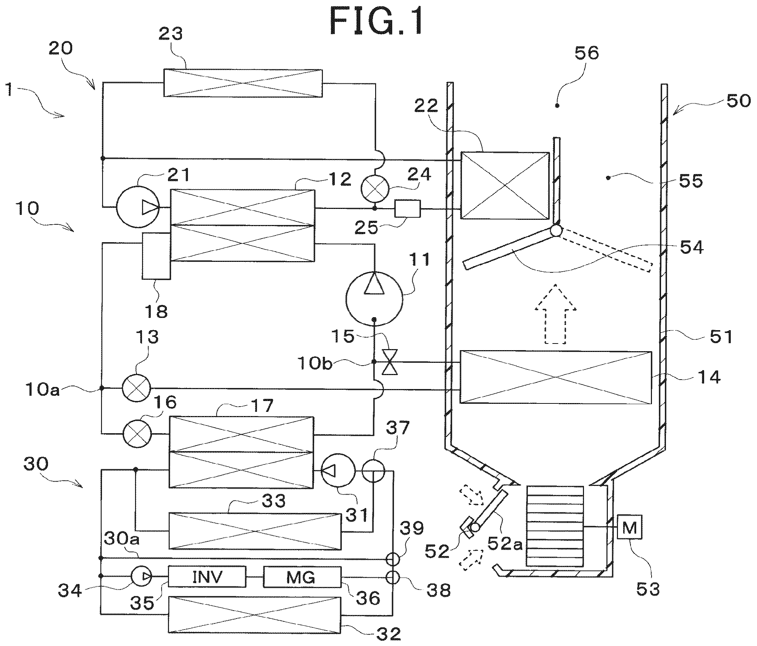

A first embodiment is described with reference to the drawings. A refrigeration cycle apparatus 10 shown in Fig. 1 is applied to a vehicle air conditioning device 1 mounted to a vehicle such as an electric vehicle or a hybrid vehicle. An electric vehicle is a vehicle that obtains driving force from an electric motor. A hybrid vehicle is a vehicle that obtains driving force from an engine (i.e., an internal combustion engine) and an electric motor.

The vehicle air conditioning device 1 is an air conditioning device that has a battery temperature control function. The vehicle air conditioning device 1 performs air conditioning of the vehicle interior, which is an air conditioning target space, and adjusts the temperatures of a battery 33, an inverter 35, and a motor-generator 36. In the refrigeration cycle apparatus 10 according to this embodiment, the cooling target object is the air, the battery 33, the inverter 35, and the motor-generator 36.

The battery 33 is a secondary battery that stores electrical power supplied to vehicle-mounted devices such as electric motors. In this embodiment, the battery 33 is a lithium-ion battery. The battery 33 is formed by stacking a plurality of battery cells (not shown) and electrically connecting these battery cells in series or in parallel. The battery 33 is a so-called battery pack.

The inverter 35 is a power conversion unit that converts the direct current power supplied from the battery 33 into alternating current power and outputs it to the motor-generator 36. The motor-generator 36 generates the driving force for the vehicle using the power output from the inverter 35 and generates regenerative power during the vehicle deceleration or downhill driving.

The inverter 35 and the motor-generator 36 are electrical devices (so-called power train equipment) for generating the driving force for vehicle travel. The inverter 35 and motor-generator 36 generate heat during operation.

The cooling target object of the refrigeration cycle apparatus 10 may be another power train equipment, such as a DC-DC converter or a charger. The DC-DC converter converts the high-voltage DC power supplied from the battery 33 into low-voltage DC power and supplies it to the auxiliary equipment mounted to the vehicle. The charger is used to charge the battery 33 when charging from an external power source.

The vehicle air conditioning system 1 cools the battery 33, the inverter 35, and the motor-generator 36 using the low thermal energy generated by refrigeration cycle apparatus 10.

The thermal capacity of the battery 33 is greater than that of the inverter 35 and the motor-generator 36. Also, the thermal time constant of the battery 33 is greater than that of the inverter 35 and the motor-generator 36. The thermal time constant is the product of the thermal capacity and the thermal resistance.

Therefore, when the same heat energy is applied to the battery 33, and the inverter 35 and the motor-generator 36, the temperature change of the battery 33 is slower than the temperature change of the inverter 35 and the motor-generator 36.

The refrigeration cycle apparatus 10 includes a compressor 11, a condenser 12, a first expansion valve 13, an evaporator 14, a pressure regulator 15, a second expansion valve 16, a chiller 17, and a receiver 18. The refrigeration cycle apparatus 10 is a vapor compression refrigeration machine. In this embodiment, the refrigeration cycle apparatus 10 uses a fluorocarbon refrigerant as the refrigerant. In this embodiment, the refrigeration cycle apparatus 10 constitutes a subcritical refrigeration cycle in which the high-pressure side refrigerant pressure does not exceed the critical pressure of the refrigerant. The refrigerant includes refrigeration oil (specifically, PAG oil) for lubricating the compressor 11. A part of the refrigeration oil circulates through the refrigeration cycle together with the refrigerant.

The compressor 11 is an electric compressor driven by an electrical power supplied from the battery 33, which sucks in the refrigerant of the refrigeration cycle apparatus 10, compresses it, and ejects it. The compressor 11 may also be a variable-capacity compressor driven by a belt.

The condenser 12 condenses the high-pressure side refrigerant by exchanging heat between the high-pressure side refrigerant emitted from the compressor 11 and the coolant liquid of the high-temperature coolant liquid circulation route 20. The condenser 12 is a high-pressure side refrigerant heat transfer medium heat exchanger.

The coolant liquid of the high-temperature coolant liquid circulation route 20 is a fluid that functions as heat transfer medium. The coolant liquid of the high-temperature coolant liquid circulation route 20 is high-temperature heat transfer medium. In this embodiment, the coolant liquid of the high-temperature coolant liquid circulation route 20 is a liquid containing at least ethylene glycol, dimethylpolysiloxane, or a nanofluid, or a non-freezing liquid. The high-temperature coolant liquid circulation route 20 is a high-temperature heat transfer medium circulation route in which high-temperature heat transfer medium circulates.

The receiver 18 is a gas-liquid separation section that separates the gas and liquid phases of the refrigerant flowing from the condenser 12, ejecting the liquid phase refrigerant to the downstream side, and stores the excess refrigerant from the refrigeration cycle. The flow of the liquid phase refrigerant ejected from the receiver 18 branches at a branch section 10a.

The first expansion valve 13 is a first pressure reduction section that reduces the pressure of the liquid phase refrigerant flowing from the receiver 18. The first expansion valve 13 is composed of an electrically operated variable throttle mechanism. The first expansion valve 13 includes a valve body and an electric actuator. The valve body changes the opening degree (i.e., throttle opening degree) of the refrigerant flow path. The electric actuator changes the opening degree of the valve body. The electric actuator may be, for example, a stepper motor.

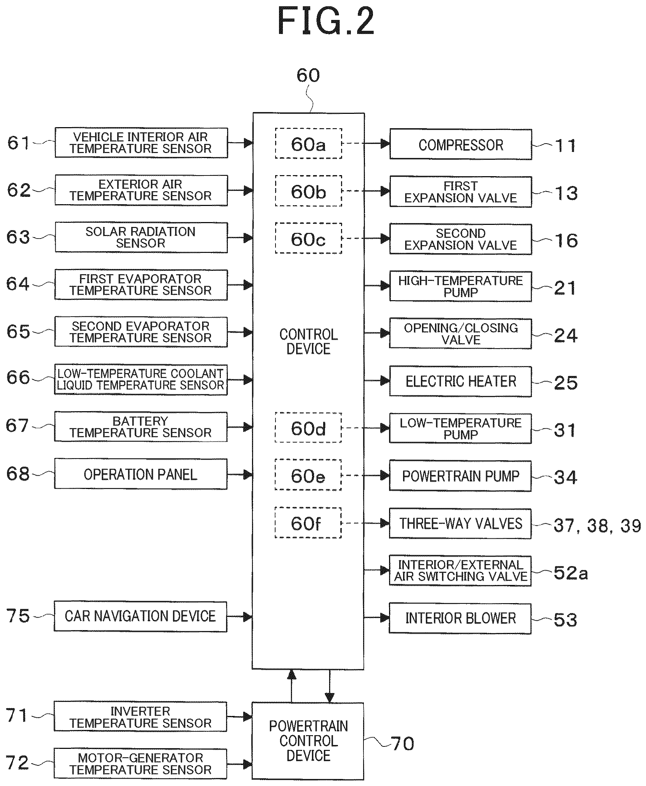

The first expansion valve 13 is a variable throttle mechanism having a full-closure function that completely closes the refrigerant flow path. The first expansion valve 13 is controlled by control signals output from the control device 60 shown in Fig. 2.

The evaporator 14 evaporates the refrigerant by heat exchange between the refrigerant flowing from the first expansion valve 13 and the air supplied to the vehicle interior, thereby cooling the air supplied to the vehicle interior. The evaporator 14 is a refrigerant-air heat exchanger. The evaporator 14 is an air evaporator that evaporates the refrigerant to cool the air. The evaporator 14 is the first evaporation section.

The pressure regulator 15 maintains the pressure of the refrigerant at the outlet side of the evaporator 14 within a predetermined range. The pressure regulator 15 is a pressure adjustment unit (or, in other words, a pressure reduction unit for pressure adjustment). The pressure regulator 15 suppresses frost formation in the evaporator 14 by maintaining the pressure of the refrigerant (or, in other words, the temperature of the refrigerant) in the evaporator 14 greater than or equal to a predetermined value.

The pressure regulator 15 is configured as a variable throttle mechanism. Specifically, when the refrigerant pressure at the outlet side of evaporator 14 falls below the predetermined value, the pressure regulator 15 reduces the area of the refrigerant flow path (i.e., the throttle opening), and when the refrigerant pressure on the outlet side of evaporator 14 exceeds the predetermined value, the pressure regulator 15 increases the area of the refrigerant flow path (i.e., the throttle opening).

When the fluctuation in the circulating refrigerant flow rate in the refrigeration cycle is small, a fixed throttle mechanism having an orifice, a capillary tube, etc., may be provided instead of the pressure regulator 15.

The second expansion valve 16 and the chiller 17 are arranged in parallel with the first expansion valve 13, the evaporator 14, and the pressure regulator 15 with respect to the refrigerant flow.

The second expansion valve 16 reduces the pressure of the liquid phase refrigerant flowing from the condenser 12 and expands it. The second expansion valve 16 is the second pressure reduction section. The second expansion valve 16 is an electrically operated variable throttle mechanism having a valve body and an electric actuator. The valve body can change the opening degree (i.e., throttle opening degree) of the refrigerant flow path. The electric actuator changes the opening degree of the valve body. The electric actuator may, for example, be a stepper motor.

The second expansion valve 16 is configured as a variable throttle mechanism having a full closure function that fully closes the refrigerant flow path. In other words, the second expansion valve 16 can block the flow of refrigerant by fully closing the refrigerant flow path. The second expansion valve 16 is controlled by a control signal output from the control device 60.

The chiller 17 evaporates the refrigerant by heat exchange between the low-pressure refrigerant flowing from the second expansion valve 16 and the coolant liquid of the low-temperature coolant liquid circulation route 30, thereby cooling the coolant liquid. The chiller 17 is a second evaporator. The chiller 17 is a low-pressure heat exchanger between the refrigerant and the heat transfer medium. The chiller 17 is a cooling evaporator that evaporates the refrigerant to cool the coolant liquid. The chiller 17 is the second evaporator section.

The gas phase refrigerant generated by the evaporation of refrigerant in the chiller 17 is mixed with the refrigerant flowing from the pressure regulator 15 at the mixing section 10b, and then sucked into the compressor 11 for compression.

The coolant liquid in the low-temperature coolant liquid circulation route 30 is a liquid that functions as a heat transfer medium. The coolant liquid in the low-temperature coolant liquid circulation route 30 is a low-temperature heat transfer medium. In this embodiment, the coolant liquid in the low-temperature coolant liquid circulation route 30 is a liquid containing at least ethylene glycol, dimethylpolysiloxane or nanofluid, or antifreeze liquid. The low-temperature coolant liquid circulation route 30 is a low-temperature heat transfer medium circulation route in which the low-temperature heat transfer medium circulates.

The high-temperature coolant liquid circulation route 20 is provided with the condenser 12, a high-temperature pump 21, a heater core 22, a high-temperature radiator 23, an opening/closing valve 24, and an electric heater 25.

The high-temperature pump 21 is a heat transfer medium pump that sucks in and ejects the coolant liquid. The high-temperature pump 21 is an electric pump. The high-temperature pump 21 is a high-temperature side flow control section that adjusts the flow rate of the coolant liquid circulating in the high-temperature coolant liquid circulation route 20.

The heater core 22 heats the air to be supplied to the vehicle interior by heat exchange between the coolant liquid in the high-temperature coolant liquid circulation route 20 and the air to be supplied to the vehicle interior. The heater core 22 is an air heating heat exchanger. In the heater core 22, the coolant liquid releases heat to the air to be supplied to the vehicle interior. The condenser 12, the high-temperature coolant liquid circulation route 20, and the heater core 22 are heat dissipation units that perform heat exchange between the refrigerant ejected from compressor 11 and the air supplied to the vehicle interior, thereby dissipating heat to the air.

The high-temperature radiator 23 performs heat exchange between the coolant liquid of the high-temperature coolant liquid circulation route 20 and the outside air. The high-temperature radiator 23 is a high-temperature heat exchanger between the heat transfer medium and the outside air. The high-temperature radiator 23 and the opening/closing valve 24 are provided in parallel with the heater core 22 with respect to the flow of the high-temperature coolant liquid.

The opening/closing valve 24 opens and closes the coolant liquid flow path on the high-temperature radiator 23 side. The opening/closing valve 24 is an electromagnetic valve. The opening/closing valve 24 is controlled by the control device 60. The opening/closing valve 24 switches the state of the flow of the coolant liquid in the high-temperature coolant liquid circulation route 20. The opening/closing valve 24 is a high-temperature switching unit.

The opening/closing valve 24 may be a thermostat. A thermostat is a mechanism that displaces a valve body using wax, which changes volume in response to temperature change, to open or close the coolant liquid flow path. The thermostat is a coolant liquid temperature-responsive valve.

The electric heater 25 is an auxiliary heating device for heating the coolant liquid in the high-temperature coolant liquid circulation route 20. The electric heater 25 is an auxiliary heating section. The electric heater 25 serves as an auxiliary heat source for heating air in the heater core 22. As the electric heater 25, a PTC heater or the like that generates heat when supplied with electricity may be adopted. The electric heater 25 is a Joule heat generation section that generates Joule heat. The heat output of the electric heater 25 is controlled by the control voltage output from the control device 60.

The low-temperature coolant liquid circulation route 30 is provided with the chiller 17, a low-temperature pump 31, a low-temperature radiator 32, the battery 33, a powertrain pump 34, the inverter 35, the motor-generator 36, a three-way valve 37 for battery, a three-way valve for power train 38, and a three-way valve for bypass 39.

The low-temperature pump 31 sucks in and ejects the coolant liquid. The low-temperature pump 31 is a heat transfer medium pump. The low-temperature pump 31 is an electric pump. The low-temperature pump 31 adjusts the flow rate of the coolant liquid circulating through the low-temperature coolant liquid circulation route 30. The low-temperature pump 31 is a low-temperature side flow rate adjustment unit. The low-temperature radiator 32 performs heat exchange between the coolant liquid in the low-temperature coolant liquid circulation route 30 and the outside air. The low-temperature radiator 32 is a low-temperature heat exchanger between the heat transfer medium and the outside air.

The battery 33 is an on-board device mounted to the vehicle. The battery 33 generates heat during operation. The battery 33 emits the heat generated during operation to the coolant liquid of the low-temperature coolant liquid circulation route 30. In other words, the battery 33 supplies heat to the coolant liquid of the low-temperature coolant liquid circulation route 30.

The powertrain pump 34 sucks in and ejects the coolant liquid for circulating in the inverter 35 and motor-generator 36, which are power train equipment. The powertrain pump 34 is a heat transfer medium pump.

The low-temperature radiator 32, the battery 33, the inverter 35, the motor-generator 36, and a bypass passage 30a are arranged in parallel with respect to the flow of the coolant liquid. Each of the three-way valve 37 for battery, the three-way valve for power train 38, and the three-way valve for bypass 39 is a heat transfer medium flow switching sections that switches the state of the flow of coolant liquid in the low-temperature coolant liquid circulation route 30. Each of the three-way valve 37 for battery, the three-way valve for power train 38, and the three-way valve for bypass 39 is a rout switching units that switches the state of the low-temperature coolant liquid circulation route 30.

Each of the three-way valve 37 for battery, three-way valve for power train 38, and three-way valve for bypass 39 is a supply ratio adjustment unit that adjusts the coolant liquid supply ratios to the inverter 35, the motor-generator 36, and the battery 33, respectively.

The three-way valve 37 for battery switches the state of the flow of the coolant liquid to the battery 33. The three-way valve for power train 38 switches the state of the flow of coolant liquid to the inverter 35 and motor-generator 36. The three-way valve for bypass 39 switches the state of the flow of coolant liquid to the bypass passage 30a.

The three-way valve 37 for battery, the three-way valve for power train 38, and the three-way valve for bypass 39 are controlled by control device 60 respectively.

The evaporator 14 and the heater core 22 are stored in a casing 51 (hereinafter referred to as the air conditioning casing) of an interior air conditioning unit 50. The interior air conditioning unit 50 is provided inside of an instrument panel (not shown) in the front part of the vehicle interior. The air conditioning casing 51 is an air passage forming member that forms an air passage.

The heater core 22 is provided downstream of the air flow of the evaporator 14 in the air passage within the air conditioning casing 51. The air conditioning casing 51 stores an interior/external air switching box 52 and an interior blower 53. The interior/external air switching box 52 includes an interior/external air switching valve 52a. The interior/external air switching valve 52a introduces either one or both of the interior air and the external air into the air passage within the air conditioning casing 51. The interior/external air switching valve 52a is an interior/external air switching section. The interior/external air switching valve 52a adjusts the ratio of interior air and the external air introduced into the air passage within the air conditioning casing 51. The interior/external air switching valve 52a is an interior/external air adjustment section.

The interior blower 53 sucks in the interior air and the external air introduced into the air passage within the air conditioning casing 51 through the interior/external air switching box 52 and blows them out. The interior/external air switching valve 52a and the interior blower 53 are controlled by the control device 60.

An air-mixing valve 54 is provided between the evaporator 14 and the heater core 22 in the air passage within the air conditioning casing 51. The air-mixing valve 54 adjusts the ratio of the airflow between the cold air flowing through the evaporator 14 and entering the heater core 22 and the cold air flowing through a cold air bypass passage 55.

The cold air bypass passage 55 is an air passage through which cold air that has passed through the evaporator 14 flows bypassing the heater core 22.

The air-mixing valve 54 is a rotatable door having a rotary shaft rotatably supported relative to the air conditioning casing 51 and a door base plate coupled to the rotary shaft. By adjusting the opening position of the air-mixing valve 54, the temperature of the air conditioning air blown from the air conditioning casing 51 into the vehicle interior is adjusted to a desired temperature.

The rotary shaft of the air-mixing valve 54 is driven by a servo motor. The servo motor is controlled by the control device 60.

The air-mixing valve 54 may be a sliding door that slides in a direction perpendicular to the air flow. The sliding door may be a plate-shaped door formed from a rigid material or a film door formed from a flexible film material.

The air conditioned air adjusted in temperature by the air-mixing valve 54 is blown into the vehicle interior through a blow-out ports 56 formed in the air conditioning casing 51.

The control device 60 shown in Fig. 2 includes a well-known microcomputer including a CPU, ROM, and RAM, and its peripheral circuits. The control device 60 performs various calculations and processing based on a control program stored in the ROM. Control target devices are connected to the output side of the control device 60. The control device 60 controls the control target devices.

The control target devices controlled by the control device 60 may include the compressor 11, the first expansion valve 13, the second expansion valve 16, the high-temperature pump 21, the opening/closing valve 24, the electric heater 25, the low-temperature pump 31, the powertrain pump 34, the three-way valve 37 for battery, the three-way valve for power train 38, the three-way valve for bypass 39, the interior/exterior air switching valve 52a, and the interior blower 53, and so on.

The software and hardware that control the electric motor of the compressor 11 in the control device 60 correspond to a refrigerant ejection capacity control unit 60a. The software and hardware that controls the first expansion valve 13 in the control device 60 correspond to a first throttle control unit 60b. The software and hardware that controls the second expansion valve 16 in the control device 60 corresponds to a second throttle control unit 60c. The second throttle control unit 60c is a cooling switch unit that switches between a cooling state in which the coolant liquid is cooled by the chiller 17 and a non-cooling state in which the coolant liquid is not cooled by the chiller 17.

The software and hardware that control the high-temperature pump 21 in the control device 60 correspond to a high-temperature heat transfer medium flow control unit. The software and hardware that control the opening/closing valve 24 in the control device 60 correspond to an opening/closing valve control unit.

The software and hardware that control the electric heater 25 in the control device 60 correspond to an auxiliary heating control unit. The software and hardware that control the low-temperature pump 31 in the control device 60 correspond to a first heat transfer medium flow control unit 60d. The software and hardware that control the powertrain pump 34 in the control device 60 correspond to a second heat transfer medium flow control unit 60e. The software and hardware that control three-way valve 37 for battery, three-way valve for power train 38, and three-way valve for bypass 39 in the control device 60 correspond to a heat transfer medium flow control unit 60f. The heat transfer medium flow control unit 60f is a circuit switching decision unit that determines whether the switching of the coolant liquid circulation state in the low-temperature coolant liquid circulation route 30 should be operated.

The control device 60 is an supply ratio determination unit that determines the coolant liquid supply ratio for each of the inverter 35, motor-generator 36, and battery 33.

Input terminals of control device 60 are connected to various control sensors, including an vehicle interior air temperature sensor 61, an exterior air temperature sensor 62, a solar radiation sensor 63, a first evaporator temperature sensor 64, a second evaporator temperature sensor 65, a low-temperature coolant liquid temperature sensor 66, and a battery temperature sensor 67.

The vehicle interior air temperature sensor 61 detects the vehicle interior air temperature Tr. The exterior air temperature sensor 62 detects the exterior air temperature Tam. The solar radiation sensor 63 detects the solar radiation As into the vehicle interior.

The first evaporator temperature sensor 64 is a temperature detection unit that detects the temperature TE1 (hereinafter referred to as the evaporator temperature) of evaporator 14. The first evaporator temperature sensor 64 is, for example, a fin thermistor that detects the temperature of the heat exchange fins of evaporator 14, or a refrigerant temperature sensor that detects the temperature of the refrigerant flowing through evaporator 14.

The second evaporator temperature sensor 65 is a temperature detection unit that detects the temperature TE2 of chiller 17 (hereinafter referred to as the second evaporator temperature). The second evaporator temperature sensor 65 may be, for example, a refrigerant temperature sensor that detects the temperature of the refrigerant flowing through chiller 17.

The low-temperature coolant liquid temperature sensor 66 is a temperature detection unit that detects the temperature TW of the coolant liquid in the low-temperature coolant liquid circulation route 30. For example, the low-temperature coolant liquid temperature sensor 66 detects the temperature of the coolant liquid in the chiller 17.

The battery temperature sensor 67 is a battery temperature detection unit that detects the temperature TB of the battery 33. The battery temperature sensor 67 may include multiple temperature sensors that detect the temperatures at multiple locations of the battery 33.

The input terminals of the control device 60 are connected to various operation switches provided on an operation panel 68. The various operation switches are operated by the occupants. The operation panel 68 is provided near the instrument panel in the front part of the vehicle interior. The control device 60 receives operation signals from the respective various operation switches.

The various operation switches include a driving mode setting switch, an air conditioner switch, and a temperature setting switch. The driving mode setting switch is a switch for setting a vehicle's driving mode to one of an Eco mode, a Normal mode, or a Sport mode.

The Eco mode is a driving mode in which the output of the motor-generator 36 is suppressed to prioritize energy savings. The Sport mode is a driving mode in which the output of the motor-generator 36 is not restricted, regardless of energy savings. The Normal mode is a driving mode of intermediate between the Eco mode and the Sport mode.

The air conditioner switch is a switch for setting whether to cool the air by the vehicle interior air conditioning unit 50. The temperature setting switch is a switch for setting the desired temperature of the vehicle interior.

The input terminals and output terminals of control device 60 are connected to a powertrain control device 70. The powertrain control device 70 is a powertrain control unit that controls the inverter 35 and the motor-generator 36, which are power train equipment.

The control device 60 receives the requested output value of the motor-generator 36 from the powertrain control device 70.

An input terminals of the powertrain control device 70 are connected to an inverter temperature sensor 71 and a motor-generator temperature sensor 72.

The inverter temperature sensor 71 is an power train equipment temperature detection unit that detects the temperature of the inverter 35. The motor-generator temperature sensor 72 is a power train equipment temperature detection unit that detects the temperature of the motor-generator 36.

The detection signals from the inverter temperature sensor 71 and the motor-generator temperature sensor 72 are input to the control device 60 via the powertrain control device 70.

The input terminals of the control device 60 are connected to a car navigation device 75. The control device 60 receives map information, traffic information, etc., from the car navigation device 75.

Among the information processed by control device 60, the requested output value of the motor-generator 36, the temperature of inverter 35, the temperature of motor-generator 36, the map information, and the traffic information are driving state-related information. The driving state-related information is information related to the driving state of the vehicle.

Next, the operation of the above configuration will be described. First, an overview of the air conditioning operation will be described.

The control device 60 determines the operating state of each of the control target devices connected to the control device 60 (in other words, the control signals output to each of the control target device) based on the target ejection temperature TAO, detection signals from the sensor group, etc.

The target ejection temperature TAO is the target temperature of an ejection air blown into the vehicle interior. The target ejection temperature TAO is an indicator representing the air conditioning load (i.e., the air conditioning heat load) required to the vehicle air conditioning system 1. The control device 60 calculates the target ejection temperature TAO based on the following equation F1.

$$TAO = Kset \times Ts - Kr \times Tr - Kam \times Tam - Ks \times As + C \ldots (F1)$$

In equation F1, Ts is a set vehicle interior temperature set by the temperature setting switch on the control panel 68, Tr is a vehicle interior temperature detected by the vehicle interior temperature sensor 61, Tam is an exterior temperature detected by the exterior temperature sensor 62, and As is a solar radiation detected by the solar radiation sensor 63. Ks, Kr, Kam, and Ks are control gains, and C is a correction constant.

The control signal output to the compressor 11 (i.e., the signal indicating the rotation speed of the compressor 11) is determined based on a feedback control causing the target temperature TEO to approach the temperature TE1 of the evaporator 14.

The target temperature TEO is determined by referring to a control map stored in the control device 60 based on the target ejection temperature TAO. In this embodiment, the control map is specified such that the target temperature TEO increases as the target ejection temperature TAO increases.

In the refrigeration cycle apparatus 10 during an air conditioning mode, the state of the refrigerant circulating in the refrigeration cycle changes as follows.

A high-pressure refrigerant emitted from the compressor 11 flows into the condenser 12. The refrigerant flowing into the condenser 12 releases heat to the coolant liquid in the high-temperature coolant liquid circulation route 20. As a result, the refrigerant in the condenser 12 is cooled and condensed.

The refrigerant ejected from the condenser 12 flows into the first expansion valve 13 and undergoes pressure reduction and expansion until it becomes a low-pressure refrigerant. The low-pressure refrigerant reduced in pressure in the first expansion valve 13 flows into the evaporator 14 and evaporates by absorbing heat from the air being blown into the vehicle interior. As a result, the air being blown into the vehicle interior is cooled.

The refrigerant flowing from the evaporator 14 flows to an inlet of the compressor 11 and is compressed again by the compressor 11.

The coolant liquid from the high-temperature coolant liquid circulation route 20, which has absorbed heat from the refrigerant at the condenser 12, is circulated to the heater core 22. At the heater core 22, the air cooled at the evaporator 14 is heated by the coolant liquid of the high-temperature coolant liquid circulation route 20.

As described above, the air is cooled by absorbing heat from the low-pressure refrigerant at the evaporator 14, and the cooled air is heated at the heater core 22 and blown into the vehicle interior. This enables air conditioning in the vehicle interior.

Next, the circulation mode for cooling the battery 33, the inverter 35, and the motor-generator 36 will be described. The control device 60 switches the circulation mode of the coolant liquid for the battery 33, the inverter 35, and the motor-generator 36 in the low-temperature coolant liquid circulation route 30 to one of the following modes: a radiator heat dissipation mode, a radiator heat dissipation battery cooling mode, a chiller cooling mode, or a coordinated cooling mode.

The radiator heat dissipation mode corresponds to the first circulation state of the low-temperature coolant liquid circulation route 30, the radiator heat dissipation battery cooling mode corresponds to the second circulation state of the low-temperature coolant liquid circulation route 30, the chiller cooling mode corresponds to the third circulation state of the low-temperature coolant liquid circulation route 30, and the coordinated cooling mode corresponds to the fourth circulation state of the low-temperature coolant liquid circulation route 30.

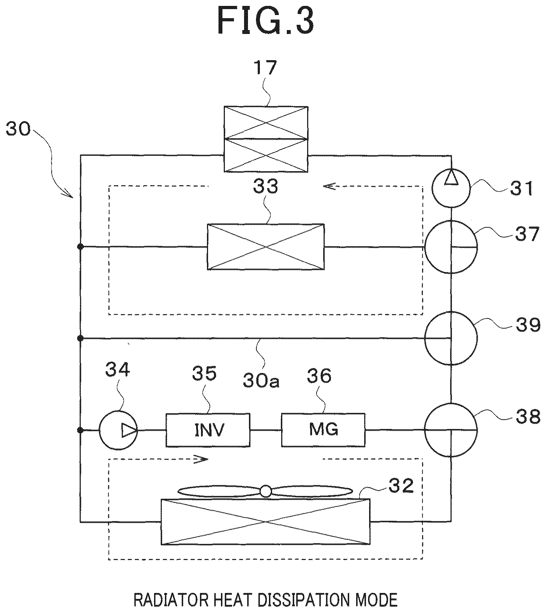

In the radiator heat dissipation mode, the control device 60 activates the low-temperature pump 31 and the powertrain pump 34, and switches the states of the three-way valve for power train 38 and the three-way valve for bypass 39 such that, as shown by a dashed arrow in Fig. 3, the coolant liquid circulates between the chiller 17 and the bypass passage 30a and the coolant liquid circulates between the inverter 35 and the motor-generator 36, and the low-temperature radiator 32. As a result, the coolant liquid circulating through the bypass passage 30a is cooled by the chiller 17, and the heat emitted by the inverter 35 and motor-generator 36 is released to the outside air via the low-temperature radiator 32.

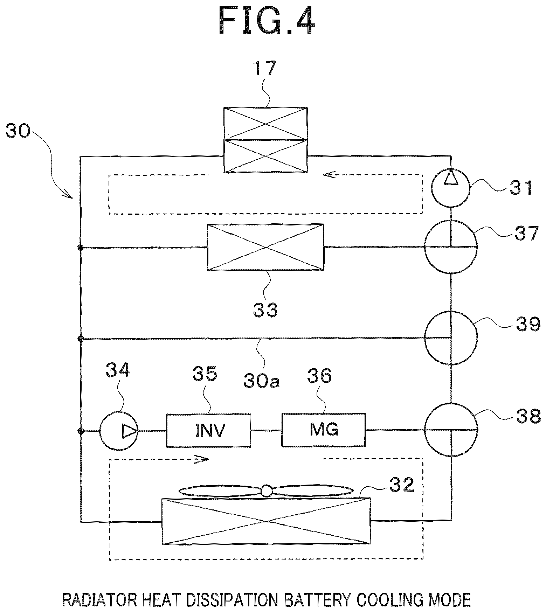

In the radiator heat dissipation battery cooling mode, the control device 60 activates the low-temperature pump 31 and the powertrain pump 34, and switches the states of the three-way valve for power train 38 and the three-way valve for bypass 39 such that, as shown by the dashed arrow in Fig. 4, the coolant liquid circulates between the chiller 17 and the battery 33 and the coolant liquid circulates between the inverter 35 and the motor-generator 36, and the low-temperature radiator 32. As a result, the heat emitted by the battery 33 is absorbed by the refrigerant in refrigeration cycle apparatus 10 via the chiller 17, and the heat emitted by inverter 35 and motor-generator 36 is released to the outside air via the low-temperature radiator 32.

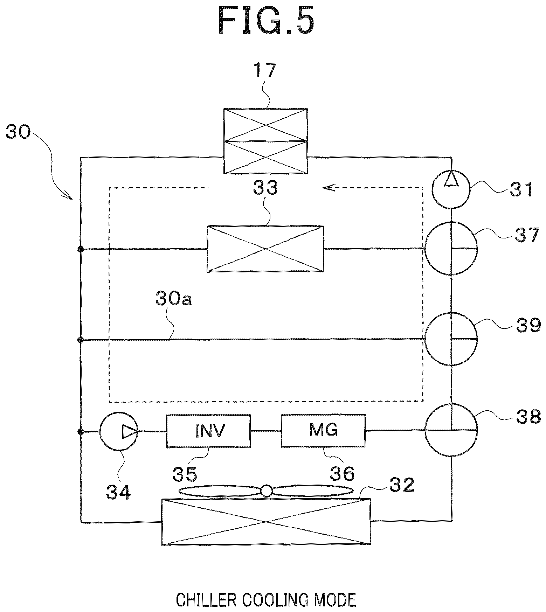

In the chiller cooling mode, the control device 60 activates at least one of the low-temperature pump 31 and the powertrain pump 34 and switches the state of the three-way valve for power train 38 such that the coolant liquid circulates between the inverter 35 and the motor-generator 36, and the chiller 17 as shown by the dashed arrow in Fig. 5. As a result, the heat emitted by the inverter 35 and the motor-generator 36 is absorbed by the refrigerant of the refrigeration cycle apparatus 10 in the chiller 17.

In the chiller cooling mode, the inverter 35 and the motor-generator 36 are cooled using the refrigeration cycle apparatus 10, resulting in higher cooling efficiency compared to the radiator heat dissipation mode, where the heat emitted by the inverter 35 and the motor-generator 36 is released to the outside air.

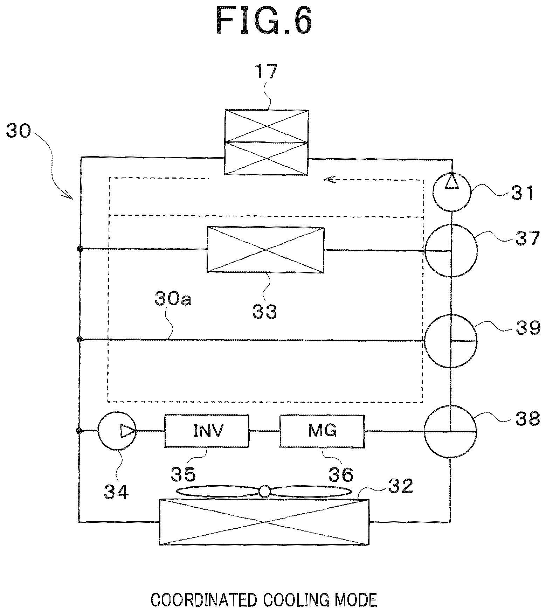

In the coordinated cooling mode, the control device 60 operates at least one of the low-temperature pump 31 and the powertrain pump 34, and switches the states of the three-way valve for power train 38 and the three-way valve for bypass 39 such that, as shown by the dashed arrow in Fig. 6, the coolant liquid circulates between the inverter 35 and the motor-generator 36 and the chiller 17 and the coolant liquid circulates between the battery 33 and the chiller 17. As a result, the heat emitted by the battery 33, the inverter 35, and the motor-generator 36 is absorbed by the refrigerant of the refrigeration cycle apparatus 10 in the chiller 17.

In the coordinated cooling mode, the refrigeration cycle apparatus 10 can cool the battery 33, the inverter 35, and the motor-generator 36. In the coordinated cooling mode, the flow rate between the coolant liquid flowing through the battery 33 side and the coolant liquid flowing through the inverter 35 and motor-generator 36 is adjusted by controlling the opening degree of the three-way valve 37 for battery, the three-way valve for power train 38, and the three-way valve for bypass 39 respectively.

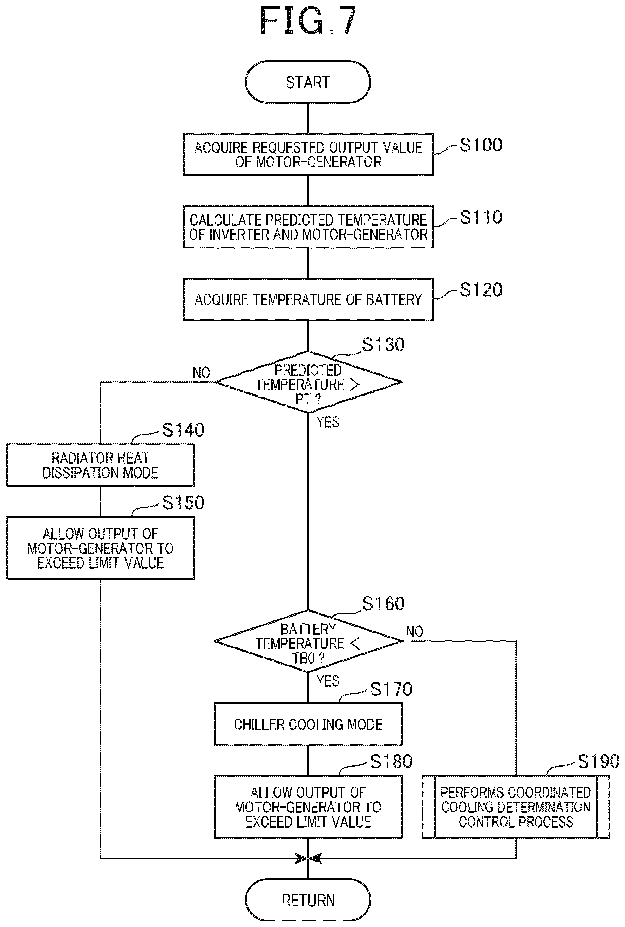

Fig. 7 is a flowchart showing the control process performed by the control device 60. In step S100, the control device 60 acquires the requested output value of the motor-generator 36 from the powertrain control device 70. In step S110, the control device 60 calculates the predicted temperature of the inverter 35 and the motor-generator 36 based on the requested output value of the motor-generator 36. The control device 60 calculates the predicted temperature of the inverter 35 and the motor-generator 36 to be higher as the requested output value of the motor-generator 36 increases.

In step S120, the control device 60 acquires the temperature TB of the battery 33 detected by the battery temperature sensor 67. In step S130, the control device 60 determines whether the predicted temperature of the inverter 35 and the motor-generator 3 exceeds a threshold PT. The threshold PT is the temperature of the inverter 35 and the motor-generator 36 when the cooling capacity of the inverter 35 and the motor-generator 36 becomes insufficient in the radiator heat dissipation mode.

When it is determined that the predicted temperature of the inverter 35 and the motor-generator 36 does not exceed the threshold PT in step S130, the control device 60 proceeds to steps S140 to S150, sets the circulation mode of the low-temperature coolant liquid circulation route 30 to the radiator heat dissipation mode, and allows the output of the motor-generator 36 to exceed a limit value. The limit value is an output value of the motor-generator 36 when the temperatures of the inverter 35 and the motor-generator 36 reach the threshold PT. As a result, as shown in Fig. 3, the heat emitted by the inverter 35 and the motor-generator 36 is released to the outside air via the low-temperature radiator 32. Note that when there is a cooling request for the battery 33, the control device 60 sets the circulation mode of the low-temperature coolant liquid circulation route 30 to the radiator heat dissipation battery cooling mode shown in Fig. 4.

When it is determined that the predicted temperature of the inverter 35 and motor-generator 36 exceeds the threshold PT in step S130, the control device proceeds to step S160, and determines whether the temperature TB of the battery 33 is below the battery cooling threshold TB0. The battery cooling threshold TB0 is the temperature of the battery 33 at which cooling of the battery 33 is required.

When it is determined that the temperature TB of battery 33 is below the battery cooling threshold TB0 in step S160, the control device 60 proceeds to steps S170 to S180, sets the circulation mode of the low-temperature coolant liquid circulation route 30 to the chiller cooling mode, and allows the output of motor-generator 36 to exceed the limit value. As a result, as shown in Fig. 5, the inverter 35 and the motor-generator 36 are cooled by the coolant liquid cooled by the chiller 17 of the refrigeration cycle apparatus 10.

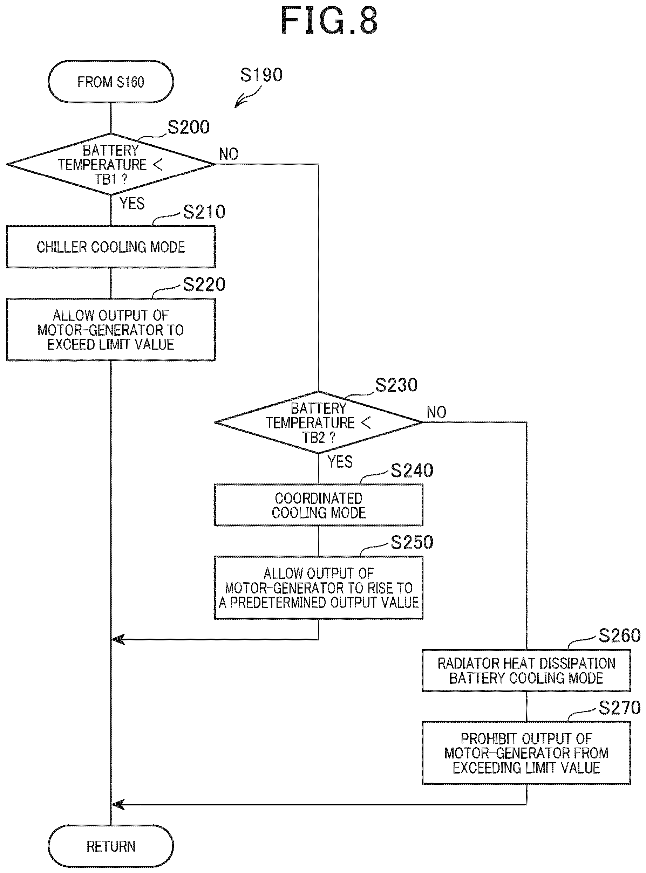

When it is determined in step S160 that the temperature TB of battery 33 is not below the battery cooling threshold TB0, the control device 60 proceeds to step S190 and performs the coordinated cooling determination control process shown in the flowchart of Fig. 8.

In the coordinated cooling determination control process, in step S200, the control device 60 determines whether the temperature TB of the battery 33 is below a battery priority threshold TB1. The battery priority threshold TB1 is a value greater than the battery cooling threshold TB0. The battery priority threshold TB1 is the temperature of the battery 33 at which it is necessary to prioritize cooling the battery 33 over the inverter 35 and the motor-generator 36.

When it is determined that the temperature TB of battery 33 is below the battery priority threshold TB1 in step S200, the control device 60 proceeds to steps S210 to S220, sets the circulation mode of the low-temperature coolant liquid circulation route 30 to the chiller cooling mode, and allows the output of the motor-generator 36 to exceed the limit value. As a result, as shown in Fig. 5, the inverter 35 and the motor-generator 36 are cooled by the coolant liquid cooled by the chiller 17 of the refrigeration cycle apparatus 10.

When it is determined that the temperature TB of battery 33 is not below the battery priority threshold TB1 in step S200, the control device 60 proceeds to step S230 and determines whether the temperature TB of battery 33 is below the output limit threshold TB2. The output limit threshold TB2 is a value greater than the battery priority threshold TB1. The output limit threshold TB2 is the temperature of battery 33 at which the output of the motor-generator 36 is prohibited from exceeding the limit value.

When it is determined that the temperature TB of battery 33 is below the output limit threshold TB2 in step S230, the control device 60 proceeds to step S240 and sets the circulation mode of the low-temperature coolant liquid circulation route 30 to the coordinated cooling mode shown in Fig. 6. As a result, the three-way valve 37 for battery, the three-way valve for power train 38, and the three-way valve for bypass 39 are controlled respectively such that the flow of the coolant liquid required for cooling the battery 33 flows to the battery 33, and the remaining flow is directed to the inverter 35 and the motor-generator 36.

In step S250, control device 60 allows the output of motor-generator 36 to rise to a predetermined output value that is greater than the limit value. The predetermined output value is an output value permitted based on the flow rate of the coolant liquid flowing to the inverter 35 and motor-generator 36 (a value indicating the cooling capacity for the inverter 35 and motor-generator 36). In other words, the output of the motor-generator 36 is limited to the output value permitted based on the cooling capacity for the inverter 35 and motor-generator 36.

This ensures that the battery 33 is prioritized for cooling over the inverter 35 and the motor-generator 36, while also suppressing the temperature of the inverter 35 and the motor-generator 36 from exceeding the threshold PT.

When it is determined that the temperature TB of battery 33 is not below the output limit threshold TB2 in step S230, the control device 60 proceeds to steps S260 to S270, sets the circulation mode of the low-temperature coolant liquid circulation route 30 to the radiator heat dissipation battery cooling mode, and prohibits the output of the motor-generator 36 from exceeding the limit value.

As a result, as shown in Fig. 4, the entire flow of the coolant liquid cooled by the chiller 17 of the refrigeration cycle apparatus 10 flows into battery 33, and the coolant liquid circulates between the inverter 35, the motor-generator 36, and the low-temperature radiator 32. Therefore, the battery 33 is cooled by the coolant liquid cooled by refrigeration cycle apparatus 10 cooled by the chiller 17, and the heat emitted by the inverter 35 and the motor-generator 36 is released to the outside air via the low-temperature radiator 32.

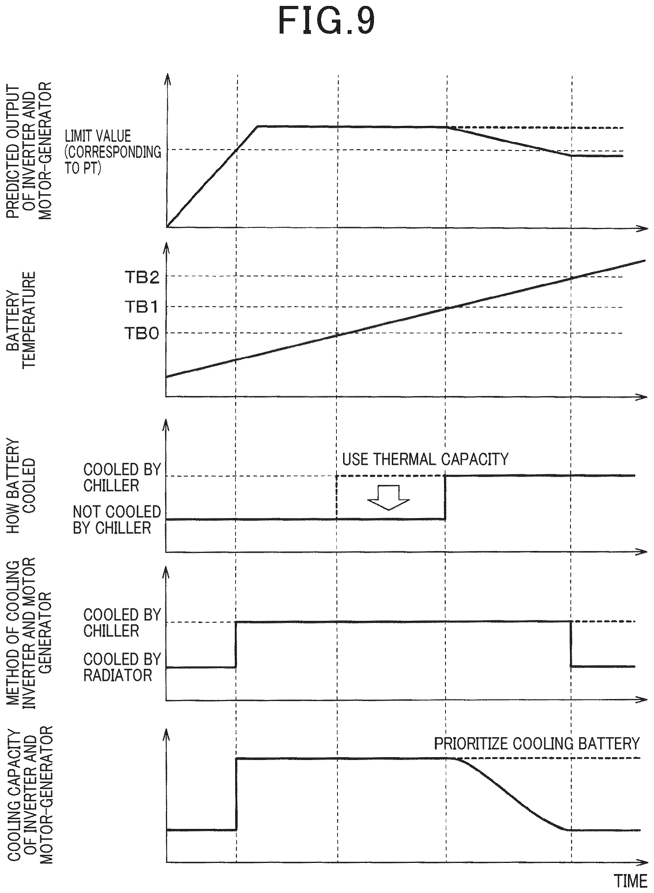

An example of control according to the present embodiment is shown in Fig. 9. In this example, at first, the output of the motor-generator 36 is below the limit value (the temperature of inverter 35 and the motor-generator 36 is below the threshold PT), and the temperature TB of the battery 33 is below the battery cooling threshold TB0. Therefore, the circulation mode of the low-temperature coolant liquid circulation route 30 is set to the radiator heat dissipation mode, causing the heat emitted by the inverter 35 and the motor-generator 36 to be dissipated to the outside air via the low-temperature radiator 32, and the battery 33 is not cooled by the coolant liquid cooled by the chiller 17 of the refrigeration cycle apparatus 10.

When the output of the motor-generator 36 exceeds the limit value (the temperature of the inverter 35 and the motor-generator 36 exceeds the threshold PT), the circulation mode of the low-temperature coolant liquid circulation route 30 is set to the chiller cooling mode. This increases the cooling capacity of the inverter 35 and the motor-generator 36.

At this time, even if the temperature TB of battery 33 exceeds the battery cooling threshold TB0, the circulation mode of the low-temperature coolant liquid circulation route 30 remains in the chiller cooling mode, but the temperature rise of the battery 33 is suppressed by utilizing the thermal capacity (i.e., thermal time constant) of the battery 33 itself.

When the temperature TB of the battery 33 exceeds the battery priority threshold TB1, the circulation mode of the low-temperature coolant liquid circulation route 30 is set to the coordinated cooling mode. At this time, as the temperature TB of the battery 33 increases, the flow rate of the coolant liquid flowing to the battery 33 increases, and the flow rate of the coolant liquid flowing to the inverter 35 and the motor-generator 36 decreases.

As a result, the cooling capacity of the battery 33 increases, but the cooling capacity of the inverter 35 and the motor-generator 36 decreases accordingly. Therefore, the output of the motor-generator 36 is permitted to rise to the predetermined output value permitted based one the cooling capacity for the inverter 35 and the motor-generator 36 (in other words, the output of the motor-generator 36 is limited to the output permitted based on the cooling capacity for the inverter 35 and the motor-generator 36). This suppresses the temperature rise of the inverter 35 and the motor-generator 36. Therefore, as the temperature TB of the battery 33 increases, the output of the motor-generator 36 decreases.

When the temperature TB of the battery 33 exceeds the output limit threshold TB2, in the coordinated cooling mode, the entire flow rate of the coolant liquid cooled by the chiller 17 of the refrigeration cycle apparatus 10 is directed to the battery 33, and the coolant liquid circulates between the inverter 35, the motor-generator 36, and the low-temperature radiator 32. As a result, the cooling capacity of battery 33 is maximized, and the cooling capacity of the inverter 35 and the motor-generator 36 is limited to external air cooling. At this time, since the output of the motor-generator 36 is prohibited from exceeding the limit value, even if the cooling capacity of the inverter 35 and the motor-generator 36 is reduced to external air cooling only, the temperature rise of the inverter 35 and the motor-generator 36 is suppressed.

In this way, according to the present embodiment, it is possible to ensure cooling of the battery 33 while allowing the heat generation of the inverter 35 and the motor-generator 36 to be permitted to the greatest extent possible.

In this embodiment, as described in the flowchart of Fig. 7 to 8, when both the inverter 35 and the motor-generator 36 and the battery 33 need to be cooled, the control device 60 sets the circulation mode of the low-temperature coolant liquid circulation route 30 to the chiller cooling mode. That is, the control device 60 prioritizes the supply of heat transfer medium to the inverter 35 and the motor-generator 36, utilizing the thermal time constant of the battery 33 to suppress the temperature rise of the battery 33.

Specifically, as described in steps S160 to S170 and S200 to S210, when both the inverter 35 and the motor-generator 36 and the battery 33 need to be cooled and the need to cool the battery 33 is low, the control device 60 sets the circulation mode of the low-temperature coolant liquid circulation route 30 to the chiller cooling mode and stops the supply of coolant liquid to the battery 33. By this control, the control device 60 prioritizes the supply of heat transfer medium to the inverter 35 and the motor-generator 36, and utilizes the thermal time constant of the battery 33 to suppress the temperature rise of the battery 33.

Accordingly, when distributing cooling capacity between the inverter 35, the motor-generator 36, and the battery 33, the thermal time constant of the battery 33 is effectively utilized, enabling efficient cooling of the inverter 35 and the motor-generator 36.

In this embodiment, as described in the flowchart of Fig. 7 to 8, when both the inverter 35 and the motor-generator 36 and the battery 33 need to be cooled and the need to cool the battery 33 is high, the control device 60 sets the circulation mode of the low-temperature coolant liquid circulation route 30 to the coordinated cooling mode or the radiator heat dissipation battery cooling mode. As a result, the control device 60 limits the driving force without prioritizing the supply of the coolant liquid to the inverter 35 and the motor-generator 36.

As a result, when there is a high need to cool the battery 33, the control device 60 can enhance the cooling capacity for the battery 33 while suppressing the temperature rise of the inverter 35 and the motor-generator 36.

In this embodiment, as described in the control example shown in Fig. 9, the control device 60 increases the flow rate of the coolant liquid supplied to the battery 33 as the temperature of the battery 33 increases in the coordinated cooling mode. This allows cooling capacity to be appropriately distributed between the power train equipment 35 and 36 and the battery 33 according to the cooling requirements of the battery 33.

(Second Embodiment)

In the first embodiment, the control device 60 coordinates cooling between the battery 33, and the inverter 35 and the motor-generator 36 based on the actual temperature TB of the battery 33. In a second embodiment, the control device 60 coordinates cooling between the battery 33, and the inverter 35 and motor-generator 36 based on a prediction of the heat generation of the battery 33.

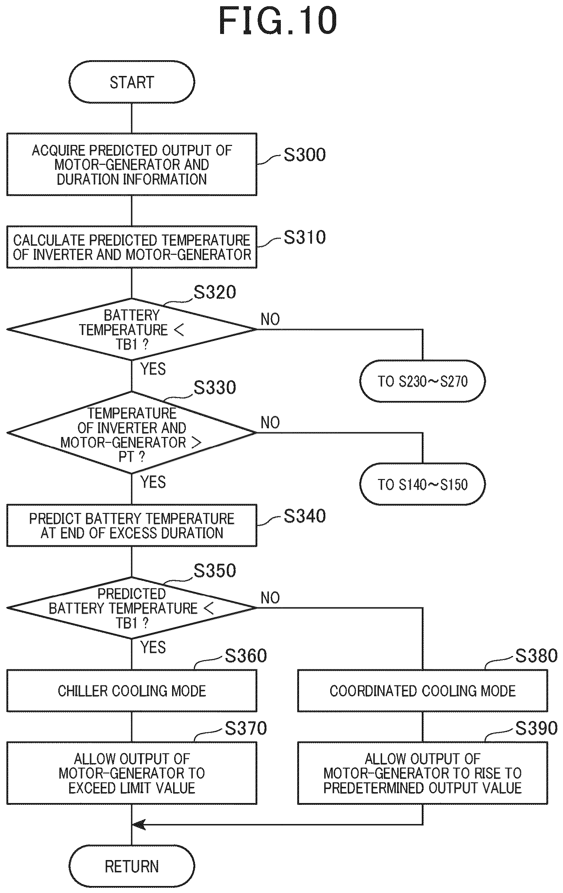

Fig. 10 is a flowchart showing the control process performed by the control device 60. In step S300, the control device 60 acquires the predicted output of the motor-generator 36 and the duration (hereinafter referred to as "excess duration") for which the output of motor-generator 36 exceeds the limit value. In step S310, the control device 60 estimates the temperature of the inverter 35 and the motor-generator 36.

In step S320, the control device 60 determines whether the battery temperature TB of the battery 33 is below the battery priority threshold TB1. When it is determined that the temperature TB of battery 33 is below the battery priority threshold TB1 in step S320, the control device 60 proceeds to step S330 and determines whether the temperature of the inverter 35 and the motor-generator 36 exceeds the threshold PT.

When it is determined that the temperature of the inverter 35 and the motor-generator 36 exceeds the threshold PT in step S330, the control device 60 proceeds to step S340 and predicts the temperature TB of the battery 33 at the end of the excess duration.

In step S350, the control device 60 determines whether the temperature TB of the battery 33 predicted in step S340 is below the battery priority threshold TB1. When it is determined that the predicted temperature TB of the battery 33 is below the battery priority threshold TB1 in step S350, the control device 60 proceeds to steps S360 to S370, sets the circulation mode of the low-temperature coolant liquid circulation route 30 to the chiller cooling mode and allows the output of the motor-generator 36 to exceed the limit value. As a result, as shown in Fig. 5, the inverter 35 and the motor-generator 36 are cooled by the coolant liquid of the refrigerant of the refrigeration cycle apparatus 10 cooled by the chiller 17.

When it is determined that the predicted temperature TB of the battery 33 is not below the battery priority threshold TB1 in step S350, the control device 60 proceeds to step S380 and sets the circulation mode of the low-temperature coolant liquid circulation route 30 to the coordinated cooling mode. As a result, the three-way valve 37 for battery, the three-way valve for power train 38, and the three-way valve for bypass 39 are controlled so that the coolant liquid required for cooling the battery 33 flows to the battery 33, and the remaining coolant liquid flows to the inverter 35 and the motor-generator 36. In step S390, the control device 60 allows the output of the motor-generator 36 to rise to the output level permitted by the cooling capacity of the inverter 35 and the motor-generator 36.

This ensures that the battery 33 is prioritized for cooling over the inverter 35 and the motor-generator 36, while also suppressing the temperature of the inverter 35 and the motor-generator 36 from exceeding the threshold PT.

When it is determined that the temperature TB of the battery 33 is not below the battery priority threshold TB1 in step S320, the control device 60 proceeds to steps S230 to S270 shown in the flowchart of Fig. 8 and sets the circulation mode of the low-temperature coolant liquid circulation route 30 to either the coordinated cooling mode or the radiator heat dissipation battery cooling mode based on the temperature TB of the battery 33.

When it is determined that the temperatures of the inverter 35 and the motor-generator 36 does not exceed the threshold PT in step S330, the control device 60 proceeds to steps S140 to S150 shown in the flowchart of Fig. 7 and sets the circulation mode of the low-temperature coolant liquid circulation route 30 to the radiator heat dissipation mode.

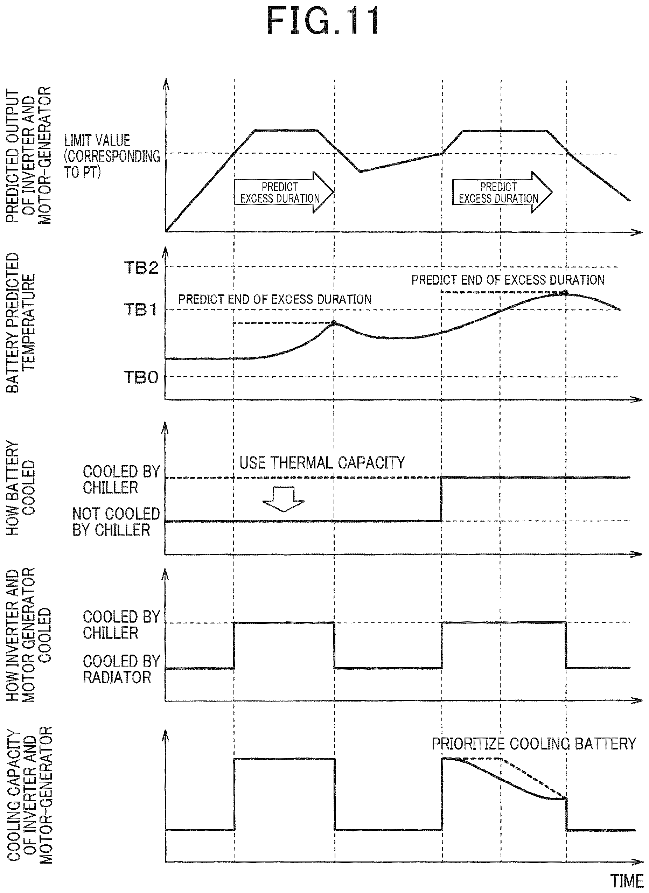

An example of control according to this embodiment is shown in Fig. 11. In this control example, since the predicted output of the motor-generator 36 is below the limit value (the predicted temperature of the inverter 35 and the motor-generator 36 are below the threshold PT) and the predicted temperature of the battery 33 is greater than or equal to the battery priority threshold TB1, the circulation mode of the low-temperature coolant liquid circulation route 30 is set to the radiator heat dissipation mode. As a result, the coolant liquid circulates between the inverter 35, the motor-generator 36, and the low-temperature radiator 32, and the heat emitted by the inverter 35 and the motor-generator 36 is released to the outside air via the low-temperature radiator 32. At this time, the temperature rise of the battery 33 is suppressed by utilizing the thermal capacity (i.e., thermal time constant) of the battery 33 itself.

When the output of the motor-generator 36 exceeds the limit value (i.e., when the temperature of the inverter 35 and the motor-generator 36 exceeds the threshold PT), the control device 60 predicts the excess duration (i.e., the duration during which the output of the motor-generator 36 exceeds the limit value) and predicts the temperature TB of the battery 33 at the end of the excess duration.

In this control example, since the predicted temperature of battery 33 at the end of the excess duration is below the battery priority threshold PT1, the circulation mode of the low-temperature coolant liquid circulation route 30 is set to the chiller cooling mode. As a result, the inverter 35 and the motor-generator 36 are cooled using the chiller 17 of the refrigeration cycle apparatus 10, thereby increasing the cooling capacity of inverter 35 and motor-generator 36. At this time, the temperature rise of the battery 33 is suppressed by utilizing the thermal capacity (i.e., thermal time constant) of battery 33 itself.

When the predicted output of the motor-generator 36 falls below the limit value (when the predicted temperature of the inverter 35 and the motor-generator 36 falls below the threshold PT), the circulation mode of the low-temperature coolant liquid circulation route 30 is set to the radiator heat dissipation mode. As a result, the coolant liquid circulates between the inverter 35, the motor-generator 36, and the low-temperature radiator 32, and the heat emitted by the inverter 35 and motor-generator 36 is released to the outside air via the low-temperature radiator 32. At this time, the temperature rise of the battery 33 is suppressed by utilizing the thermal capacity (i.e., thermal time constant) of the battery 33 itself.

When the output of the motor-generator 36 again exceeds the limit value (when the temperature of the inverter 35 and the motor-generator 36 again exceeds the threshold PT), the control device 60 again predicts the excess duration (the duration during which the output of the motor-generator 36 exceeds the limit value) and again predicts the temperature TB of the battery 33 at the end of the excess duration.

In this control example, since the predicted temperature of battery 33 at the end of the excess duration exceeds the battery priority threshold PT1, the circulation mode of the low-temperature coolant liquid circulation route 30 is set to the coordinated cooling mode. As a result, the battery 33, the inverter 35, and the motor-generator 36 are cooled using the chiller 17 of the refrigeration cycle apparatus 10. At this time, since the battery 33 is prioritized for cooling, the cooling capacity of the inverter 35 and the motor-generator 36 decreases as the predicted temperature of the battery 33 rises.

When the output of the motor-generator 36 again falls below the limit value (the temperature of the inverter 35 and the motor-generator 36 again falls below the threshold PT), the circulation mode of the low-temperature coolant liquid circulation route 30 is set to the radiator heat dissipation battery cooling mode while the predicted temperature of the battery 33 does not fall below the battery priority threshold TB1. As a result, the coolant liquid circulates between the battery 33 and the chiller 17 of the refrigeration cycle apparatus 10, and the coolant liquid circulates between the inverter 35 and the motor-generator 36, and the low-temperature radiator 32. As a result, the battery 33 is cooled using the chiller 17 of the refrigeration cycle apparatus 10, but the heat emitted by the inverter 35 and the motor-generator 36 is released to the outside air via the low-temperature radiator 32, thereby reducing the cooling capacity of the inverter 35 and the motor-generator 36.

As another control example, when the predicted temperature of the battery 33 exceeds TB2, cooling the inverter 35 and the motor-generator 36 using the chiller 17 may be prohibited, and heat may be dissipated via the radiator. However, since long-term prediction is necessary, it may be permissible to allow the output of the motor-generator 36 to exceed the limit value for a short time.

In this embodiment, as described in steps S350 to S390, the control device 60 determines that it is necessary to cool both the inverter 35 and the motor-generator 36 and that the predicted temperature of the battery 33 exceeds the battery priority threshold TB1, and sets the circulation mode of the low-temperature coolant liquid circulation route 30 to the coordinated cooling mode and does not stop the supply of coolant liquid to the battery 33.

This enables ensuring the cooling capacity of the battery 33 by predicting that its cooling may become insufficient.

(Third Embodiment)

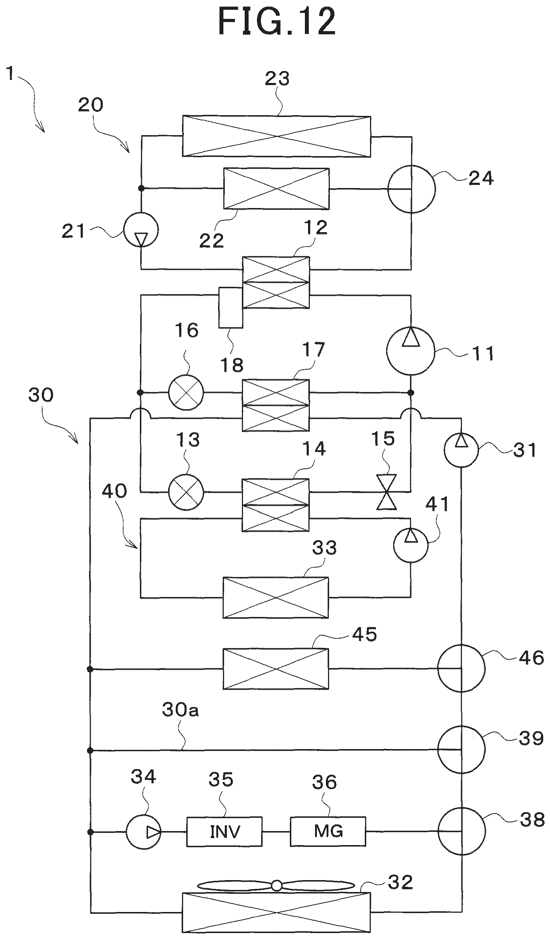

In the above embodiments, the battery 33 is cooled by the coolant liquid from the low-temperature coolant liquid circulation route 30, and the air sent into the vehicle interior is cooled by the evaporator 14. However, in a third embodiment, as shown in Fig. 12, the battery 33 is cooled by the coolant liquid cooled by evaporator 14, and the air sent into the vehicle interior is cooled by the coolant liquid from the low-temperature coolant liquid circulation route 30.

In the third embodiment, the evaporator 14 performs heat exchange between the low-pressure refrigerant ejected from the first expansion valve 13 and the coolant liquid from the coolant liquid circulation route for battery 40. The evaporator 14 is a chiller for the battery 33. The coolant liquid in the coolant liquid circulation route for battery 40 is a fluid that functions as heat transfer medium. In the third embodiment, at least ethylene glycol, dimethylpolysiloxane or a nanofluid, or a non-freezing fluid is used as the coolant liquid.

The coolant liquid circulation route for battery 40 is equipped with a battery pump 41. The battery pump 41 sucks in and ejects the coolant liquid. The battery pump 41 is a heat transfer medium pump.

The low-temperature coolant liquid circulation route 30 is provided with a cooler core 45 and a three-way valve for cooler core 46. The cooler core 45 cools air by exchanging heat between the coolant liquid cooled by chiller 17 and air to be blown into the vehicle interior. The cooler core 45 is a heat transfer medium air heat exchanger. The three-way valve for cooler core 46 switches the flow of the coolant liquid to the cooler core 45.

The three-way valve for cooler core 46 adjusts the supply ratio of the coolant liquid to the inverter 35 and the motor-generator 36, and the cooler core 45. The three-way valve for cooler core 46 is a supply ratio adjustment unit. The three-way valve for cooler core 46 is controlled by the control device 60.

The thermal capacity of the air in the vehicle interior is greater than that of the inverter 35 and the motor-generator 36. Furthermore, the thermal time constant of the air in the vehicle interior is greater than that of the inverter 35 and motor-generator 36.

Therefore, when the heat energy is applied to the air in the vehicle interior and to the inverter 35 and the motor-generator 36, the speed of the temperature change of the air in the vehicle interior is slower than the temperature change of the inverter 35 and the motor-generator 36.

Next, explanations of the operation related to the cooling of the cooler core 45, the inverter 35, and the motor-generator 36 are given. The control device 60 sets the coolant liquid circulation mode for the cooler core 45, the inverter 35, and the motor-generator 36 of the low-temperature coolant liquid circulation route 30 to one of the following modes: a radiator heat dissipation mode, a radiator heat dissipation cooling mode, a chiller cooling mode, or a coordinated cooling mode.

The radiator heat dissipation mode is a first circulation state of the low-temperature coolant liquid circulation route 30, the radiator heat dissipation cooling mode is a second circulation state of the low-temperature coolant liquid circulation route 30, a chiller cooling mode is the third circulation state of the low-temperature coolant liquid circulation route 30, and a coordinated cooling mode is the fourth circulation state of the low-temperature coolant liquid circulation route 30.

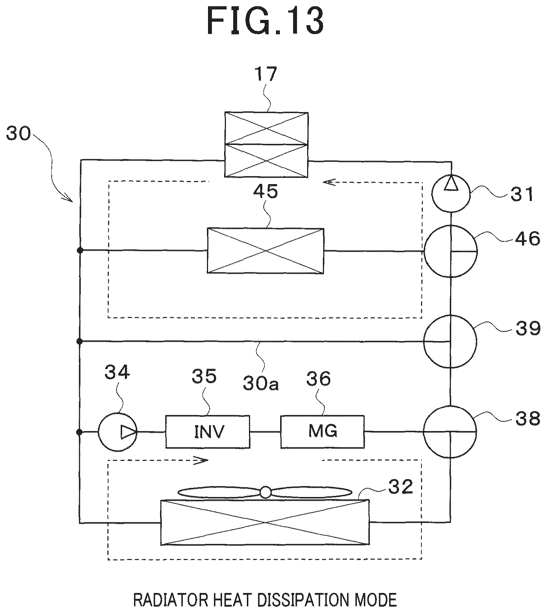

In the radiator heat dissipation mode, the control device 60 operates the low-temperature pump 31 and the power train pump 34, and switches the states of the three-way valve for cooler core 46, the three-way valve for power train 38, and the three-way valve for bypass 39 respectively, such that, as shown by the dashed arrows in Fig. 13, the coolant liquid circulates between the chiller 17 and the bypass passage 30a and causing the coolant liquid to circulate between the inverter 35 and the motor-generator 36, and the low-temperature radiator 32. As a result, the coolant liquid circulating through the bypass passage 30a is cooled by the chiller 17, and the heat emitted by the inverter 35 and the motor-generator 36 is released to the outside air via the radiator core 32.

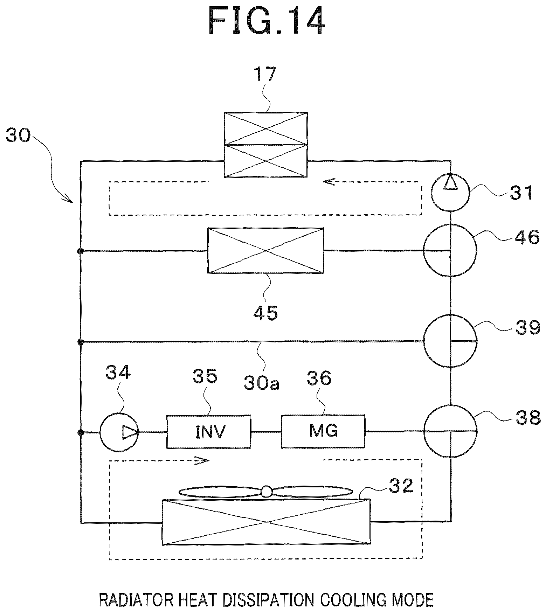

In the radiator heat dissipation cooling mode, the control device 60 operates the low-temperature pump 31 and the power train pump 34, and switches the states of the three-way valve for cooler core 46, the three-way valve for power train 38, and the three-way valve for bypass 39 respectively, such that, as shown by the dashed arrows in Fig. 14, the coolant liquid circulates between the chiller 17 and the cooler core 45. As a result, the heat emitted from the cooler core 45 is absorbed by the refrigerant in the chiller of the refrigeration cycle apparatus 10 and the heat emitted from the inverter 35 and the motor-generator 36 is released to the outside air via the low-temperature radiator 32.

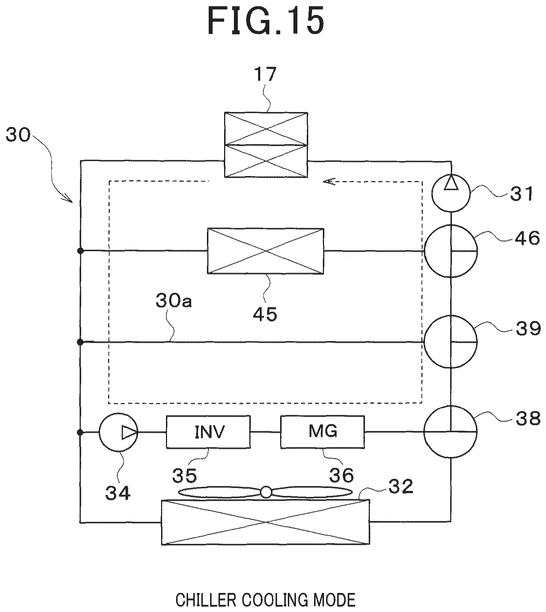

In the chiller cooling mode, the control device 60 operates at least one of the low-temperature pump 31 and the power train pump 34, and switches the states of the three-way valve for cooler core 46, the three-way valve for power train 38, and the three-way valve for bypass 39 respectively, such that, as shown by the dashed arrow in Fig. 15, the coolant liquid circulates between the inverter 35 and the motor-generator 36, and the chiller 17. As a result, the heat emitted by the inverter 35 and the motor-generator 36 is absorbed by the refrigerant in the chiller 17 of the refrigeration cycle apparatus 10.

In the chiller cooling mode, since the inverter 35 and the motor-generator 36 are cooled using the refrigeration cycle apparatus 10, the cooling capacity of the inverter 35 and the motor-generator 36 is higher compared to the radiator heat dissipation mode, where the heat emitted by the inverter 35 and the motor-generator 36 is released to the outside air.

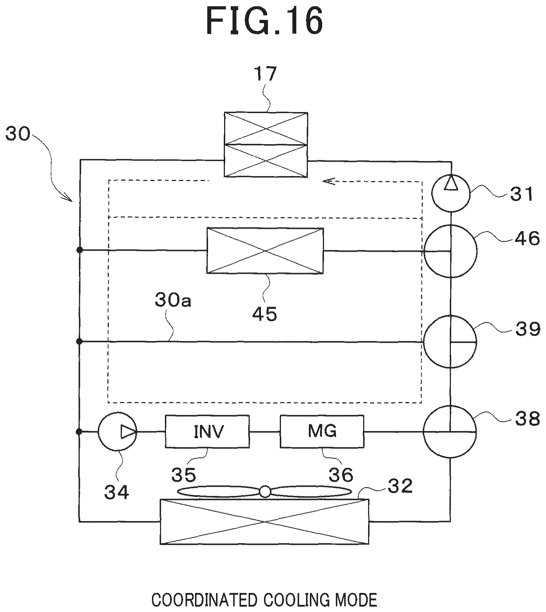

In the coordinated cooling mode, the control device 60 operates at least one of the low-temperature pump 31 and the powertrain pump 34, and switches the states of the three-way valve for cooler core 46, the three-way valve for power train 38, and the three-way valve for bypass 39 respectively, such that, as shown by the dashed arrow in Fig. 16, the coolant liquid circulates between the inverter 35 and the motor-generator 36, and the coolant liquid circulates between the cooler core 45 and the chiller 17. As a result, the heat emitted by the cooler core 45, the inverter 35, and the motor-generator 36 is absorbed by the refrigerant in the chiller of the refrigeration cycle apparatus 10.

In the coordinated cooling mode, the inverter 35 and the motor-generator 36 are cooled using the refrigeration cycle apparatus 10. In the coordinated cooling mode, the flow rate between the coolant liquid flowing to the cooler core 45 and the coolant liquid flowing to the inverter 35 and motor-generator 36 is adjusted by controlling the opening degree of the three-way valve for cooler core 46, the three-way valve for power train 38, and the three-way valve for bypass 39 respectively.

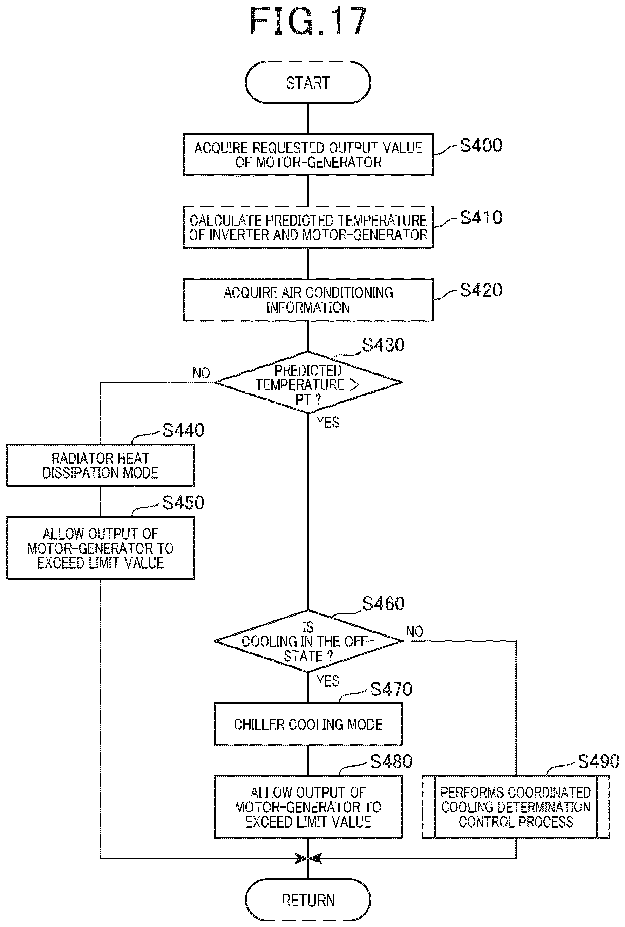

Fig. 17 is a flowchart showing the control process performed by the control device 60. In step S400, the control device 60 acquires the requested output value of the motor-generator 36 from the powertrain control device 70. In step S410, the control device 60 calculates the predicted temperature of the inverter 35 and the motor-generator 36 based on the requested output value of the motor-generator 36. The control device 60 calculates the predicted temperature of the inverter 35 and the motor-generator 36 to be higher as the requested output value of the motor-generator 36 increases.

In step S420, the control device 60 acquires an air conditioning information. The air conditioning information includes an information regarding the operating state of the interior air conditioning unit 50 and an information regarding the operating state of the air conditioner switch and temperature setting switch of the operation panel 68. For example, the on or off state of the air conditioner switch, i.e., whether the interior air conditioning unit 50 is set to cool the air, is acquired as the air conditioning information.

In step S430, the control device 60 determines whether the predicted temperature of the inverter 35 and the motor-generator 36 exceeds the threshold PT. The threshold PT is the temperature of the inverter 35 and the motor-generator 36 when the cooling capacity of the inverter 35 and the motor-generator 36 is insufficient, as set in the radiator heat dissipation mode.

When it is determined that the predicted temperature of the inverter 35 and the motor-generator 36 does not exceed the threshold PT in step S430, the control device 60 proceeds to steps S440 to S450, sets the circulation mode of the low-temperature coolant liquid circulation route 30 to the radiator heat dissipation mode, and allows the output of the motor-generator 36 to exceed the limit value. The limit value is the output value of the motor-generator 36 when the temperature of the inverter 35 and the motor-generator 36 reaches the threshold PT. As a result, as shown in Fig. 13, the heat emitted by the inverter 35 and the motor-generator 36 is released to the outside air through low-temperature radiator 32.

When it is determined that the predicted temperature of the inverter 35 and the motor-generator 36 exceeds the threshold PT in step S430, the control device 60 proceeds to step S460 and determines whether the air conditioning (i.e., cooling of the air by the interior air conditioning unit 50) is in the off-state. Specifically, the control device 60 determines whether the air conditioner switch on the operation panel 68 is set to off.

When it is determined that cooling is in the off-state in step S460, the control device 60 proceeds to steps S470 to S480, sets the circulation mode of the low-temperature coolant liquid circulation route 30 to the chiller cooling mode, and allows the output of the motor-generator 36 to exceed the limit value. As a result, as shown in Fig. 15, the inverter 35 and the motor-generator 36 are cooled by the coolant liquid cooled by the chiller 17 of the refrigeration cycle apparatus 10.

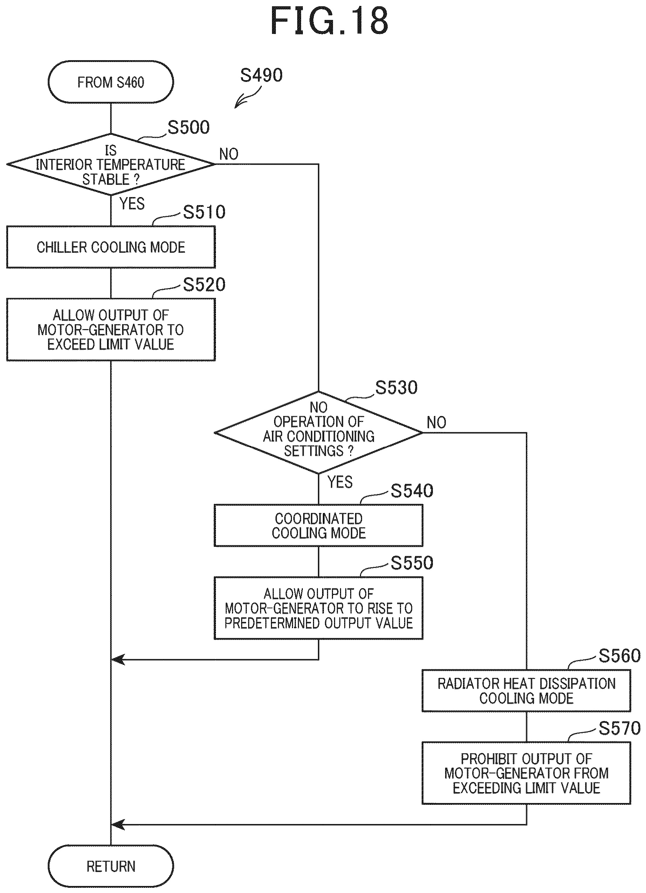

When it is determined that cooling is not in the off-state in step S460, the control device 60 proceeds to step S490 and performs the coordinated cooling determination control process shown in the flowchart of Fig. 18.

In the coordinated cooling determination control process, in step S500, the control device 60 determines whether the interior temperature Tr detected by the vehicle interior temperature sensor 61 is stable (i.e., whether the air conditioning is in a stable state). For example, in conditions such as immediately after vehicle startup in summer or when the occupant operates the temperature setting switch to abruptly change the set temperature, the vehicle interior temperature Tr is determined to be unstable due to high air conditioning load.

When it is determined that the vehicle interior temperature Tr is stable in step S500, the control device 60 proceeds to steps S510 to S520, sets the circulation mode of the low-temperature coolant liquid circulation route 30 to the chiller cooling mode, and allows the output of the motor-generator 36 to exceed the limit value. As a result, as shown in Fig. 15, the inverter 35 and the motor-generator 36 are cooled by the coolant liquid cooled by the chiller 17 of the refrigeration cycle apparatus 10.

When it is determined that the vehicle interior temperature Tr is unstable in step S500, the control device 60 proceeds to step S530 and determines whether there is any operation of the air conditioning settings by the occupants. The operation of the air conditioning settings refers to operations such as the air conditioner switch or temperature setting switch on the operation panel 68.

When it is determined that there is no air conditioning setting operation by the occupant in step S530, the control device 60 proceeds to step S540 and sets the circulation mode of the low-temperature coolant liquid circulation route 30 to the coordinated cooling mode shown in Fig. 16. As a result, the three-way valve for cooler core 46, three-way valve for power train 38, and three-way valve for bypass 39 are switched respectively, such that the coolant liquid corresponding to the flow rate required for cooling the air in the cooler core 45 flows to the cooler core 45, and the coolant liquid corresponding to the remaining flow rate flows to the inverter 35 and the motor-generator 36,

In step S550, the control device 60 allows the output of the motor-generator 36 to rise to a predetermined output value that is greater than the limit value. The predetermined output value is an output value permitted based on the flow rate of the coolant liquid flowing to the inverter 35 and motor-generator 36 (a value indicating the cooling capacity for the inverter 35 and motor-generator 36). In other words, the output of the motor-generator 36 is limited to the output value permitted based on the cooling capacity for the inverter 35 and motor-generator 36.

This ensures that the cooling of the vehicle interior is prioritized for cooling over the inverter 35 and the motor-generator 36, while also suppressing the temperature of the inverter 35 and the motor-generator 36 from exceeding the threshold PT.

When it is determined that there is an operation by the occupant to adjust the air conditioning settings (when the temperature setting switch is operated and the vehicle interior temperature Tsett decreases, resulting in an increase in cooling load) in step S530, the control device 60 proceeds to steps S560 to S570, sets the circulation mode of the low-temperature coolant liquid circulation route 30 to the radiator heat dissipation air conditioning mode, and prohibits the output of the motor-generator 36 from exceeding the limit value.

As a result, as shown in Fig. 14, the entire flow of the coolant liquid cooled by the chiller 17 of the refrigeration cycle apparatus 10 flows to the cooler core 45, and the coolant liquid circulates between the inverter 35 and the motor-generator 36, and the low-temperature radiator 32. Therefore, the air is cooled by the coolant liquid cooled by the chiller 17 of the refrigeration cycle apparatus 10 in the cooler core 45, and the heat emitted by the inverter 35 and the motor-generator 36 is released to the outside air via the low-temperature radiator 32.

According to this embodiment, just as the cooling of the battery 33 and the cooling of the inverter 35 and the motor-generator 36 are coordinated in the first embodiment, cooling of the vehicle interior (i.e., cooling of the air flowing through cooler core 45) and the cooling of inverter 35 and the motor-generator 36 are coordinated.

In this embodiment, as described in steps S500 to S510, the control device 60 sets the circulation mode of the low-temperature coolant liquid circulation route 30 to the chiller cooling mode when both cooling of the inverter 35 and the motor-generator 36, and cooling of the vehicle interior are required and the fluctuation in the vehicle interior temperature Tr is small. As a result, the supply of the coolant liquid to the air conditioning side (the cooler core 45 side) is stopped. This allows the inverter 35 and the motor-generator 36 to be cooled efficiently.

In this embodiment, when the control device 60 determines that both cooling and air conditioning of the inverter 35 and the motor-generator 36 are required and the predicted temperature of the vehicle interior temperature Tr exceeds the air conditioning priority temperature TB1, it is preferable to determine the circulation mode of the low-temperature coolant liquid circulation route 30 to the coordinated cooling mode so as not to stop the supply of the coolant liquid to the air conditioning side (i.e., the cooler core 45 side). This is because it becomes possible to ensure cooling capacity in anticipation of insufficient cooling.

In this embodiment, as described in steps S530 to S570, the control device 60 determines the circulation mode of the low-temperature coolant liquid circulation route 30 to be radiator heat dissipation air conditioning mode when both cooling and air conditioning of the inverter 35 and motor-generator 36 are required and the vehicle interior set temperature Ts is decreased. As a result, the supply of the coolant liquid to the inverter 35 and motor-generator 36 is prioritized, and the driving force is further restricted. This allows the cooling capacity to be increased while suppressing the temperature rise of the inverter 35 and motor-generator 36 when the cooling load increases.

In this embodiment, the control device 60 preferably increases the coolant liquid supply ratio to the cooling side (i.e., the cooler core 45 side) as the vehicle interior temperature Tr increases in the coordinated cooling mode. This is because the cooling capacity can be appropriately distributed between the inverter 35 and the motor-generator 36 and the cooling side (i.e., the cooler core 45 side) in accordance with the cooling load.

The present disclosure is not limited to the above-described embodiments and may be variously modified within the scope of the present disclosure without departing from the intent thereof.

In the above embodiment, the coolant liquid is used as the heat transfer medium, but other media such as oil may also be used as the heat transfer medium. A nanofluid may also be used as the heat transfer medium. A nanofluid is a fluid containing nanoparticles with particle sizes in the nanometer range.

In the above embodiment, a fluorocarbon refrigerant is used as the refrigerant in the refrigeration cycle apparatus 10, but the type of refrigerant is not limited to this, and natural refrigerants such as carbon dioxide or hydrocarbon-based refrigerants may also be used.

Furthermore, the refrigeration cycle apparatus 10 of the above embodiment constitutes a subcritical refrigeration cycle in which the high-pressure side refrigerant pressure does not exceed the critical pressure of the refrigerant, but it may also constitute a supercritical refrigeration cycle in which the high-pressure side refrigerant pressure exceeds the critical pressure of the refrigerant.

In the above embodiment, the high-temperature radiator 23 and the low-temperature radiator 32 are separated radiators, but they may be configured as a single radiator.

For example, the high-temperature radiator 23 and the low-temperature radiator 32 may be configured as a single radiator by integrating the tanks of the high-temperature radiator 23 and the low-temperature radiator 32.

In the above embodiment, the second expansion valve 16 is integrally formed with a pressure-reducing section for reducing the pressure of the refrigerant and a shut-off section for blocking the flow of the refrigerant by completely closing the refrigerant flow path, but the shut-off section for blocking the flow of the refrigerant may be separate from the second expansion valve 16.

In the above embodiment, the condenser 12 is a heat exchanger that exchanges heat between refrigerant and the coolant liquid, but the condenser 12 may also be a heat exchanger that exchanges heat between refrigerant and air.

In the above embodiment, the battery 33 is cooled by the coolant liquid cooled by the refrigerant, but the battery 33 may be directly cooled by the refrigerant or cooled by air cooled by the refrigerant.

In the above embodiment, the refrigeration cycle apparatus 10 is a receiver cycle having the receiver 18, but the refrigeration cycle apparatus 10 may also be an accumulator cycle having an accumulator.

The features of refrigeration cycle apparatus disclosed in this specification are as follows.

(Configuration 1)

A refrigeration cycle apparatus including:

a heat transfer medium circulation path (30) through which a heat transfer medium circulates;
a power train equipment (35, 36) that is an electrical device for generating driving force for a vehicle, and cooled by the heat transfer medium;
a cooling target object (33) having a greater thermal time constant than the power train equipment and being cooled by the heat transfer medium;
a radiator (32) for heat exchange between the heat transfer medium and the outside air;
a chiller (17) for heat exchange between a refrigerant of a refrigeration cycle and the heat transfer medium;
a supply ratio adjustment unit (37, 38, 46) that adjusts the supply ratio of the heat transfer medium to the power train equipment and the cooling target object respectively; and
a supply ratio determination unit (60) that determines the supply ratio, the supply ratio determination unit determining the supply ratio such that, when both the power train equipment and the cooling target object need to be cooled, the supply of the heat transfer medium to the power train equipment is prioritized and the temperature rise of the cooling target object is suppressed by utilizing the thermal time constant of the cooling target object.

(Configuration 2)

The refrigeration cycle apparatus according to configuration 1, wherein
the supply ratio determination unit determines to stop the supply of heat transfer medium to the cooling target object when both the power train equipment and the cooling target object need to be cooled and the necessity to cool the cooling target object is low.

(Configuration 3)

The refrigeration cycle apparatus according to configuration 2, wherein
the supply ratio determination unit does not determine to stop the supply of the heat transfer medium to the cooling target object when both the power train equipment and the cooling target object need to be cooled and the predicted temperature of the cooling target object is determined to be exceeding a predetermined temperature (TB1).

(Configuration 4)

The refrigeration cycle apparatus according to configuration 1, wherein
the supply ratio determination unit requests the power train equipment to limit the driving force without prioritizing the supply of heat transfer medium to the power train equipment, when both the power train equipment and the cooling target object need to be cooled and the need to cool the cooling target object is high.

(Configuration 5)

The refrigeration cycle apparatus according to configuration 1, wherein
the supply ratio determination unit increases the supply ratio of the heat transfer medium to the cooling target object as the temperature of the cooling target object increases.

(Configuration 6)

The refrigeration cycle apparatus according to configuration 1, wherein

the cooling target object is an air supplied to the vehicle interior, and
the supply ratio determination unit determines to stop the supply of heat transfer medium to the air supplied to the vehicle interior when both the power train equipment and the air supplied to the vehicle interior need to be cooled and the temperature fluctuation of the air in the vehicle interior is small.

(Configuration 7)

The refrigeration cycle apparatus according to configuration 1, wherein

the cooling target object is an air supplied to the vehicle interior, and
the supply ratio determination unit requests the power train equipment to limit the driving force without prioritizing the supply of heat transfer medium to the power train equipment, when both the power train equipment and the air supplied to the vehicle interior need to be cooled and a target temperature (Ts) of the air supplied to the vehicle interior decreases.

(Configuration 8)

The refrigeration cycle apparatus according to any one of configurations 1, 6, or 7, wherein

the cooling target object is an air supplied to the vehicle interior, and
the supply ratio determination unit increases the supply ratio of the heat transfer medium to the air supplied to the vehicle interior as the temperature of the air supplied to the vehicle interior increases.

The present disclosure has been described in accordance with the embodiments, but the present disclosure is not limited to the embodiments or structures described herein. The present disclosure includes various modifications and modifications within the scope of the present invention. In addition, various combinations and forms, as well as other combinations and forms including only one element, more than one element, or less than one element of the above, are also included within the scope and scope of the present invention.

**Claims**

1. A refrigeration cycle apparatus comprising:

   a heat transfer medium circulation path (30) through which a heat transfer medium circulates;
   a power train equipment (35, 36) that is an electrical device for generating driving force for a vehicle, and cooled by the heat transfer medium;
   a cooling target object (33) having a greater thermal time constant than the power train equipment and being cooled by the heat transfer medium;
   a radiator (32) for heat exchange between the heat transfer medium and the outside air;
   a chiller (17) for heat exchange between a refrigerant of a refrigeration cycle and the heat transfer medium;
   a supply ratio adjustment unit (37, 38, 46) that adjusts the supply ratio of the heat transfer medium to the power train equipment and the cooling target object respectively; and
   a supply ratio determination unit (60) that determines the supply ratio, the supply ratio determination unit determining the supply ratio such that, when both the power train equipment and the cooling target object need to be cooled, the supply of the heat transfer medium to the power train equipment is prioritized and the temperature rise of the cooling target object is suppressed by utilizing the thermal time constant of the cooling target object.

2. The refrigeration cycle apparatus according to claim 1, wherein
   the supply ratio determination unit determines to stop the supply of heat transfer medium to the cooling target object when both the power train equipment and the cooling target object need to be cooled and the necessity to cool the cooling target object is low.

3. The refrigeration cycle apparatus according to claim 2, wherein
   the supply ratio determination unit does not determine to stop the supply of the heat transfer medium to the cooling target object when both the power train equipment and the cooling target object need to be cooled and the predicted temperature of the cooling target object is determined to be exceeding a predetermined temperature (TB1).

4. The refrigeration cycle apparatus according to claim 1, wherein
   the supply ratio determination unit requests the power train equipment to limit the driving force without prioritizing the supply of heat transfer medium to the power train equipment, when both the power train equipment and the cooling target object need to be cooled and the need to cool the cooling target object is high.

5. The refrigeration cycle apparatus according to claim 1, wherein
   the supply ratio determination unit increases the supply ratio of the heat transfer medium to the cooling target object as the temperature of the cooling target object increases.

6. The refrigeration cycle apparatus according to claim 1, wherein

   the cooling target object is an air supplied to the vehicle interior, and

the supply ratio determination unit determines to stop the supply of heat transfer medium to the air supplied to the vehicle interior when both the power train equipment and the air supplied to the vehicle interior need to be cooled and the temperature fluctuation of the air in the vehicle interior is small.

7. The refrigeration cycle apparatus according to claim 1, wherein

the cooling target object is an air supplied to the vehicle interior, and
the supply ratio determination unit requests the power train equipment to limit the driving force without prioritizing the supply of heat transfer medium to the power train equipment, when both the power train equipment and the air supplied to the vehicle interior need to be cooled and a target temperature (Ts) of the air supplied to the vehicle interior decreases.

8. The refrigeration cycle apparatus according to any one of claims 1, 6, or 7, wherein

the cooling target object is an air supplied to the vehicle interior, and
the supply ratio determination unit increases the supply ratio of the heat transfer medium to the air supplied to the vehicle interior as the temperature of the air supplied to the vehicle interior increases.

FIG.1

# FIG.2

| Input | | Control Device 60 | | Output |
|---|---|---|---|---|
| 61 | VEHICLE INTERIOR AIR TEMPERATURE SENSOR | 60a | COMPRESSOR | 11 |
| 62 | EXTERIOR AIR TEMPERATURE SENSOR | 60b | FIRST EXPANSION VALVE | 13 |
| 63 | SOLAR RADIATION SENSOR | 60c | SECOND EXPANSION VALVE | 16 |
| 64 | FIRST EVAPORATOR TEMPERATURE SENSOR | | HIGH-TEMPERATURE PUMP | 21 |
| 65 | SECOND EVAPORATOR TEMPERATURE SENSOR | CONTROL DEVICE | OPENING/CLOSING VALVE | 24 |
| 66 | LOW-TEMPERATURE COOLANT LIQUID TEMPERATURE SENSOR | | ELECTRIC HEATER | 25 |
| 67 | BATTERY TEMPERATURE SENSOR | 60d | LOW-TEMPERATURE PUMP | 31 |
| 68 | OPERATION PANEL | 60e | POWERTRAIN PUMP | 34 |
| | | 60f | THREE-WAY VALVES | 37, 38, 39 |
| | | | INTERIOR/EXTERNAL AIR SWITCHING VALVE | 52a |
| 75 | CAR NAVIGATION DEVICE | | INTERIOR BLOWER | 53 |

POWERTRAIN CONTROL DEVICE 70

| 71 | INVERTER TEMPERATURE SENSOR |
|---|---|
| 72 | MOTOR-GENERATOR TEMPERATURE SENSOR |

21

# FIG.3

RADIATOR HEAT DISSIPATION MODE

# FIG.4

RADIATOR HEAT DISSIPATION BATTERY COOLING MODE

# FIG.5

CHILLER COOLING MODE

# FIG.6

COORDINATED COOLING MODE

# FIG.7

START

ACQUIRE REQUESTED OUTPUT VALUE OF MOTOR-GENERATOR — S100

CALCULATE PREDICTED TEMPERATURE OF INVERTER AND MOTOR-GENERATOR — S110

ACQUIRE TEMPERATURE OF BATTERY — S120

S130

PREDICTED TEMPERATURE > PT ?

NO

YES

S140

RADIATOR HEAT DISSIPATION MODE

S150

ALLOW OUTPUT OF MOTOR-GENERATOR TO EXCEED LIMIT VALUE

S160

BATTERY TEMPERATURE < TB0 ?

NO

YES

S170

CHILLER COOLING MODE

S180

ALLOW OUTPUT OF MOTOR-GENERATOR TO EXCEED LIMIT VALUE

S190

PERFORMS COORDINATED COOLING DETERMINATION CONTROL PROCESS

RETURN

# FIG.8

FROM S160

S190

S200

BATTERY TEMPERATURE < TB1 ? — NO

YES

S210

CHILLER COOLING MODE

S220

ALLOW OUTPUT OF MOTOR-GENERATOR TO EXCEED LIMIT VALUE

S230

BATTERY TEMPERATURE < TB2 ? — NO

YES

S240

COORDINATED COOLING MODE

S250

ALLOW OUTPUT OF MOTOR-GENERATOR TO RISE TO A PREDETERMINED OUTPUT VALUE

S260

RADIATOR HEAT DISSIPATION BATTERY COOLING MODE

S270

PROHIBIT OUTPUT OF MOTOR-GENERATOR FROM EXCEEDING LIMIT VALUE

RETURN

# FIG.9

PREDICTED OUTPUT OF INVERTER AND MOTOR-GENERATOR

LIMIT VALUE (CORRESPONDING TO PT)

BATTERY TEMPERATURE

TB2
TB1
TB0

HOW BATTERY COOLED

COOLED BY CHILLER

NOT COOLED BY CHILLER

USE THERMAL CAPACITY

METHOD OF COOLING INVERTER AND MOTOR GENERATOR

COOLED BY CHILLER

COOLED BY RADIATOR

COOLING CAPACITY OF INVERTER AND MOTOR-GENERATOR

PRIORITIZE COOLING BATTERY

TIME

# FIG.10

```
                    ┌──────────────┐
                    │    START     │
                    └──────┬───────┘
                           │
          ┌────────────────┴────────────────┐
          │  ACQUIRE PREDICTED OUTPUT OF     │──S300
          │  MOTOR-GENERATOR AND             │
          │  DURATION INFORMATION            │
          └────────────────┬────────────────┘
                           │
          ┌────────────────┴────────────────┐
          │ CALCULATE PREDICTED TEMPERATURE  │──S310
          │ OF INVERTER AND MOTOR-GENERATOR  │
          └────────────────┬────────────────┘
                           │        S320
                      ╱────┴────╲
                     ╱  BATTERY   ╲        NO
                    ╱ TEMPERATURE < ╲──────────────┐
                    ╲    TB1 ?      ╱               │
                     ╲────┬────────╱                │
                       YES │              ┌─────────┴────────┐
                           │    S330      │  TO S230~S270    │
                      ╱────┴────╲         └──────────────────┘
                     ╱TEMPERATURE╲        NO
                    ╱ OF INVERTER ╲───────────────┐
                    ╲ AND MOTOR-  ╱               │
                    ╲GENERATOR >  ╱               │
                     ╲   PT ?    ╱                │
                      ╲──┬──────╱       ┌─────────┴────────┐
                       YES │            │  TO S140~S150    │
                           │            └──────────────────┘
          ┌────────────────┴────────────────┐
          │  PREDICT BATTERY TEMPERATURE     │──S340
          │  AT END OF EXCESS DURATION       │
          └────────────────┬────────────────┘
                           │        S350
                      ╱────┴────╲
                     ╱ PREDICTED ╲        NO
                    ╱BATTERY TEMP. <╲──────────────────────────┐
                    ╲    TB1 ?     ╱                           │
                     ╲────┬───────╱                            │
                       YES │  S360                             │  S380
          ┌────────────────┴──────────┐         ┌──────────────┴────────────┐
          │    CHILLER COOLING MODE    │         │  COORDINATED COOLING MODE  │
          └────────────────┬──────────┘         └──────────────┬────────────┘
                           │  S370                             │  S390
          ┌────────────────┴──────────┐         ┌──────────────┴────────────┐
          │    ALLOW OUTPUT OF         │         │   ALLOW OUTPUT OF         │
          │    MOTOR-GENERATOR TO      │         │   MOTOR-GENERATOR TO RISE  │
          │    EXCEED LIMIT VALUE      │         │   TO PREDETERMINED OUTPUT  │
          └────────────────┬──────────┘         │   VALUE                   │
                           │                    └──────────────┬────────────┘
                           │◄──────────────────────────────────┘
                    ┌──────┴───────┐
                    │    RETURN    │
                    └──────────────┘
```

29

FIG.11

# FIG.12

# FIG.13

RADIATOR HEAT DISSIPATION MODE

# FIG.14

RADIATOR HEAT DISSIPATION COOLING MODE

# FIG.15

17

30

30a

45

INV

MG

31

46

39

38

34

35

36

32

CHILLER COOLING MODE

# FIG.16

COORDINATED COOLING MODE

# FIG.17

START

ACQUIRE REQUESTED OUTPUT VALUE OF MOTOR-GENERATOR — S400

CALCULATE PREDICTED TEMPERATURE OF INVERTER AND MOTOR-GENERATOR — S410

ACQUIRE AIR CONDITIONING INFORMATION — S420

S430
PREDICTED TEMPERATURE > PT ?

NO

YES

RADIATOR HEAT DISSIPATION MODE — S440

ALLOW OUTPUT OF MOTOR-GENERATOR TO EXCEED LIMIT VALUE — S450

S460
IS COOLING IN THE OFF-STATE ?

NO

YES

CHILLER COOLING MODE — S470

ALLOW OUTPUT OF MOTOR-GENERATOR TO EXCEED LIMIT VALUE — S480

PERFORMS COORDINATED COOLING DETERMINATION CONTROL PROCESS — S490

RETURN

# FIG.18

S490

```
┌─────────────┐
│  FROM S460  │
└─────────────┘
       │
       │         S500
       ▼
   ╱─────────╲           NO
  ╱    IS      ╲──────────────────┐
 ╱ INTERIOR    ╲                  │
 ╲ TEMPERATURE ╱                  │
  ╲  STABLE ? ╱                   │
   ╲─────────╱                    │
       │ YES      S510            │
       ▼                          │
┌──────────────────┐             │
│ CHILLER COOLING  │             │
│      MODE        │             │
└──────────────────┘             │
       │          S520           │
       ▼                         │
┌──────────────────┐             │
│  ALLOW OUTPUT OF │             │
│ MOTOR-GENERATOR  │             │
│  TO EXCEED LIMIT │             │
│      VALUE       │             │
└──────────────────┘             │
       │                         │
       │                      S530│
       │              ╱──────────╲
       │             ╱     NO      ╲       NO
       │            ╱  OPERATION OF  ╲──────────────┐
       │            ╲ AIR CONDITIONING╱             │
       │             ╲  SETTINGS ?   ╱              │
       │              ╲──────────────╱              │
       │                   │ YES    S540            │
       │                   ▼                        │
       │          ┌──────────────────┐             │
       │          │   COORDINATED    │             │
       │          │   COOLING MODE   │             │
       │          └──────────────────┘             │
       │                   │        S550           │
       │                   ▼                       │
       │          ┌──────────────────────┐         │
       │          │   ALLOW OUTPUT OF     │         │
       │          │ MOTOR-GENERATOR TO    │         │
       │          │ RISE TO PREDETERMINED │         │
       │          │    OUTPUT VALUE       │         │
       │          └──────────────────────┘         │
       │                   │                        │
       │◄──────────────────┘                        │
       │                                         S560│
       │                              ┌──────────────────────┐
       │                              │ RADIATOR HEAT         │
       │                              │ DISSIPATION           │
       │                              │ COOLING MODE          │
       │                              └──────────────────────┘
       │                                         │     S570
       │                                         ▼
       │                              ┌──────────────────────┐
       │                              │ PROHIBIT OUTPUT OF    │
       │                              │ MOTOR-GENERATOR FROM  │
       │                              │ EXCEEDING LIMIT VALUE │
       │                              └──────────────────────┘
       │                                         │
       │◄────────────────────────────────────────┘
       ▼
   ┌─────────┐
   │ RETURN  │
   └─────────┘
```

# EP 4 678 432 A1

<table>
<tr><td colspan="3"><b>INTERNATIONAL SEARCH REPORT</b></td><td>International application No.<br><br><b>PCT/JP2024/006571</b></td></tr>
</table>

**A. CLASSIFICATION OF SUBJECT MATTER**

*B60H 1/22*(2006.01)i; *B60L 3/00*(2019.01)i; *F25B 1/00*(2006.01)i; *B60K 11/04*(2006.01)n
FI:   B60H1/22 671; B60L3/00 J; F25B1/00 399Y; B60K11/04 G

According to International Patent Classification (IPC) or to both national classification and IPC

**B. FIELDS SEARCHED**

Minimum documentation searched (classification system followed by classification symbols)

B60H1/00-3/06; B60L3/00; F25B1/00; B60K11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-54279 A (TOYOTA JIDOSHA KABUSHIKI KAISHA) 08 April 2021 (2021-04-08) paragraphs [0024]-[0150], fig. 1-30 | 1-3, 5 |
| Y | | 1-8 |
| Y | WO 2015/115050 A1 (DENSO CORPORATION) 06 August 2015 (2015-08-06) paragraphs [0014]-[0310], fig. 1-14 | 1-8 |
| Y | JP 2020-55343 A (SUBARU CORP.) 09 April 2020 (2020-04-09) paragraph [0081] | 4 |
| A | JP 2021-5927 A (TOYOTA JIDOSHA KABUSHIKI KAISHA) 14 January 2021 (2021-01-14) paragraph [0084], fig. 8 | 1-8 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/006571**

| Patent document cited in search report | | | Publication date (day/month/year) | Patent family member(s) | | | Publication date (day/month/year) |
|---|---|---|---|---|---|---|---|
| JP | 2021-54279 | A | 08 April 2021 | US | 2021/0094443 | A1 | |
| | | | | paragraphs [0061]-[0196], fig. 1-32B | | | |
| | | | | CN | 112572092 | A | |
| WO | 2015/115050 | A1 | 06 August 2015 | JP | 2015-140093 | A | |
| JP | 2020-55343 | A | 09 April 2020 | US | 2020/0101814 | A1 | |
| | | | | paragraph [0091] | | | |
| | | | | CN | 110962529 | A | |
| JP | 2021-5927 | A | 14 January 2021 | US | 2020/0406783 | A1 | |
| | | | | paragraph [0071], fig. 8 | | | |
| | | | | CN | 112124150 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023032910 A

- JP 6791052 B